# EUROPEAN PATENT SPECIFICATION

(11) **EP 3 890 441 B1**
(45) Date of publication and mention of the grant of the patent: **13.08.2025**
(21) Application number: 20735922.5
(22) Date of filing: 03.01.2020
(51) Int. Cl.: H05B 6/12

(54) **COIL DISK AND COOKING APPLIANCE**
SPULENPLATTE UND KOCHGERÄT
INDUCTEUR BOBINÉ ET APPAREIL DE CUISSON

(30) Priority: 03.01.2019 CN 201910013910; 03.01.2019 CN 201920022962 U; 03.01.2019 CN 201920017254 U; 03.01.2019 CN 201920017272 U; 03.01.2019 CN 201920022963 U
(43) Date of publication of application: 06.10.2021
(73) Proprietor: Foshan Shunde Midea Electrical Heating Appliances Manufacturing Co., Ltd., Foshan, Guangdong 528311 (CN)
(72) Inventor: FAN, Jichang, Foshan, Guangdong 528311 (CN); YI, Liang, Foshan, Guangdong 528311 (CN); WANG, Kaixiang, Foshan, Guangdong 528311 (CN); GUO, Xingjia, Foshan, Guangdong 528311 (CN); WU, Jinhua, Foshan, Guangdong 528311 (CN); ZHANG, Yifei, Foshan, Guangdong 528311 (CN)
(74) Representative: Whitlock, Holly Elizabeth Ann
(86) International application number: PCT/CN2020/070346
(87) International publication number: WO 2020/140990

(56) References cited:
- CN-A- 106 211 401
- CN-U- 204 539 524
- CN-U- 204 559 921
- CN-U- 205 666 983
- CN-U- 206 094 198
- CN-U- 206 294 375
- CN-U- 206 472 325
- CN-U- 206 620 323
- CN-U- 209 608 890
- CN-U- 209 748 848
- US-A1- 2018 376 547

## Description

### TECHNICAL FIELD

The present disclosure relates to the technical field of coil disks, in particular to a coil disk and a cooking utensil.

### BACKGROUND

With the development of technology, the use of coil disk has become more and more widespread, such as in induction cookers, rice cookers and other cooking utensils. The coils of the existing coil disks are usually fixed by glue. When the coils are working and heats up, it will cause the glue to produce peculiar smell, which is not conducive to the use of cooking utensil.
CN 204539524 U relates generally to a coil disk for induction heating.

### SUMMARY

Aspects of the invention are set out in the claims. The main objective of the present disclosure is to provide a coil disk, which aims to provide a new winding method to avoid the occurrence of peculiar smell during use of the coil disk.

In order to achieve the above objective, the present disclosure provides a coil disk, including:
a support structure located in a middle of the coil disk;
a first clamping rib, one end of the first clamping rib being connected to the support structure, another end of the first clamping rib extending in a direction away from the support structure; and
a second clamping rib located below the first clamping rib, one end of the second clamping rib being connected to the support structure, another end of the second clamping rib extending in a direction away from the support structure;
the first clamping rib, the second clamping rib, and the support structure are enclosed to form a first clamping gap for winding an enameled wire.

In an embodiment, the coil disk includes a plurality of first clamping ribs, and the plurality of first clamping ribs are radially distributed along a circumferential direction of the support structure; and/or
the coil disk includes a plurality of second clamping ribs, and the plurality of second clamping ribs are radially distributed along the circumferential direction of the support structure for first clamping gaps to be distributed along the circumferential direction of the support structure.

In an embodiment, a width of the first clamping rib gradually increases outward from the support structure; and/or
a width of the second clamping rib gradually increases outward from the support structure.

In an embodiment, the first clamping rib and the second clamping rib have straight sections, and a radial cross section of the first clamping gap has a straight section accordingly; and/or
the first clamping rib and the second clamping rib have stepped sections, and a radial cross section of the first clamping gap has a stepped section accordingly; and/or
the first clamping rib and the second clamping rib have arc-shaped curved sections, and a radial cross section of the first clamping gap has an arc curved section accordingly.

In an embodiment, a number of layers of coil windings wound in the first clamping gap is 2 to 5.

In an embodiment, a height of the first clamping gap is 2 mm to 20 mm.

In an embodiment, the coil disk at least includes an inner ring heating zone and an outer ring heating zone;
the first clamping gap includes an inner clamping gap located in the inner ring heating zone and an outer clamping gap located in the outer ring heating zone, and the inner clamping gap and the outer clamping gap are upwardly inclined and have different inclination angles.

In an embodiment, the outer clamping gap includes a first winding gap and a second winding gap that are arranged along an up-down direction, and an inclination angle of the first winding gap is different from an inclination angle of the second winding gap.

In an embodiment, the support structure includes at least an inner support structure located in the inner ring heating zone and an outer support structure located in the outer ring heating zone;
the first clamping rib includes a first inner clamping rib and a first outer clamping rib, and the second clamping rib includes a second inner clamping rib and a second outer clamping rib;
the first inner clamping rib and the second inner clamping rib are inclined upward from the inner support structure in a direction towards the outer ring heating zone, to form the inner clamping gap between the first inner clamping rib and the second inner clamping rib;
the first outer clamping rib and the second outer clamping rib are inclined upward from the outer support structure in a direction away from the inner ring heating zone, to form the outer clamping gap between the first outer clamping rib and the second outer clamping rib.

In an embodiment, the coil disk includes an inner ring heating zone and an outer ring heating zone; the first clamping gap includes an inner clamping gap located in the inner ring heating zone and an outer clamping gap located in the outer ring heating zone;
the outer clamping gap includes a first winding gap and a second winding gap that are arranged along an up-down direction, and/or the inner clamping gap includes a third winding gap and a fourth winding gap that are arranged along the up-down direction;
the first winding gap is provided with a first coil winding and the second winding gap is provided with second coil winding; and/or the third winding gap is provided with a third coil winding and the fourth winding gap is provided with a fourth coil winding.

In an embodiment, the first coil winding and the second coil winding are independent of each other; or
the first coil winding and the second coil winding are connected in series; or
the first coil winding and the second coil winding are connected in parallel.

In an embodiment, the third coil winding and the fourth coil winding are independent of each other; or
the third coil winding and the fourth coil winding are connected in series; or
the third coil winding and the fourth coil winding are connected in parallel.

In an embodiment, the coil disk includes a control circuit board, a first switching circuit is provided on the control circuit board, and the first switching circuit is respectively connected with the first coil winding and the second coil winding to switch a connection relationship between the first coil winding and the second coil winding; and/or
a second switching circuit is provided on the control circuit board, and the second switching circuit is respectively connected with the third coil winding and the fourth coil winding to switch a connection relationship between the third coil winding and the fourth coil winding.

In an embodiment, the coil disk further includes a first inductor L1 and a first resistor R1 configured with the first coil winding, a second inductor L2 and a second resistor R2 configured with the second coil winding, a third inductor L3 and a third resistor R3 configured with the third coil winding, and a fourth inductor L4 and a fourth resistor R4 configured with the fourth coil winding;
a first inductance value of the first inductor L1 is smaller than a second inductance value of the second inductor L2 and/or a fourth inductance value of the fourth inductance L4;
a first resistance value of the first resistor R1 is greater than a second resistance value of the second resistor R2 and/or a fourth resistance value of fourth resistor R4;
a third inductance value of the third inductor L3 is smaller than a fourth inductance value of the fourth inductor L4 and/or a second inductance value of the second inductor L2; and
a third resistance value of the third resistor R3 is greater than a fourth resistance value of the fourth resistor R4 and/or a second resistance value of the second resistor R2.

In an embodiment, a height h1 of a coil winding located in the inner clamping gap is equivalent to a height h2 of a coil winding located in the outer clamping gap.

In an embodiment, the first clamping gap includes an inner arc section, and the inner arc section is curved and extended downward from the support structure.

In an example, the first clamping gap further includes a transition section and an outer arc section; the inner arc section forming a concave arc downward from the support structure, the outer arc section forming a concave arc upward from the transition section, and the inner arc section and the outer arc section being transitionally connected through the transition section.

In an example, the first clamping rib is provided with a first heat dissipation opening; and/or the second clamping rib is provided with a second heat dissipation opening.

In an example, a first gap is provided between two adjacent first clamping ribs, and the second clamping rib is located between the two adjacent first clamping ribs in correspondence with the first gap.

In an example, the coil disk further includes a coil support located below the second clamping rib, and the second clamping rib, the coil support and the support structure are enclosed to form a second clamping gap;
the first clamping gap is in communication with the second clamping gap through an opening; and
during winding process of the enameled wire of the coil disk, after passing through the opening, the enameled wire enters from the first clamping gap to the second clamping gap, or enters from the second clamping gap to the first clamping gap, such that the enameled wire is alternately wound in the first clamping gap and the second clamping gap through the opening.

In an example, the opening is provided along a radial direction of the coil disk, after passing through the opening each time, the enameled wire enters from the first clamping gap to the second clamping gap, or enters from the second gap to the first clamping gap, such that coils in the first clamping gap and the second clamping gap are wound sequentially and alternately.

In technical solutions of the present disclosure, a first clamping gap is formed between the first clamping rib and the second clamping rib, and the enameled wire is wound in the winding gap, such that the coil is clamped by the first clamping rib and the second clamping rib, so as to realize the fixation of the coil. Compared with the existing fixing method, the fixing of the coil does not require the use of glue, so that no peculiar smell will be generated when the coil is heated, which is beneficial to the user's use. In addition, the efficiency of winding and fixing the coil in this way is greatly increased, and the stability of the coil after winding is greatly increased. It is worth noting that, since the first and second clamping ribs both have free ends, the movement of the first and second clamping ribs is more flexible. When the coil is wound into the first clamping gap, it is beneficial to the entry and clamping of the coil, especially when the multi-layer coil is provided, it is beneficial to the arrangement of the coil in the first clamping gap.

### BRIEF DESCRIPTION OF THE DRAWINGS

In order to more clearly illustrate the embodiments of the present disclosure, drawings used in the embodiments will be briefly described below. Obviously, the drawings in the following description are only some embodiments of the present disclosure. It will be apparent to those skilled in the art that other figures can be obtained according to the structures shown in the drawings without creative work.
FIG 1 is a schematic structural view of a coil disk according to an embodiment of the present disclosure.
FIG 2 is a schematic cross-sectional structural view of FIG. 1.
FIG 3 is a schematic structural view of the coil disk according to another embodiment of the present disclosure.
FIG 4 is a schematic cross-sectional structural view of FIG. 3.
FIG 5 is a schematic structural view of the coil disk according to yet another embodiment of the present disclosure.
FIG 6 is a schematic cross-sectional structural view of FIG. 5.
FIG 7 is a schematic structural view of the coil disk according to still another embodiment of the present disclosure.
FIG. 8 is a schematic rear structural view of FIG. 7.
FIG 9 is a schematic cross-sectional structural view of FIG. 7.
FIG 10 is a schematic structural view of the coil disk according to another embodiment of the present disclosure.
FIG 11 is a partial enlarged view of portion A in FIG 10.
FIG 12 is a schematic detailed structural view of FIG. 10 when a coil winding is not wound.
FIG 13 is a schematic internal structural view of the coil disk according to another embodiment of the present disclosure.
FIG 14 is a schematic structural view of the coil disk according to another embodiment of the present disclosure.
FIG 15 is a schematic rear structural view of FIG 14.
FIG 16 is a schematic cross-sectional structural view of FIG. 14.
FIG 17 is a schematic internal structural view of the coil disk according to another embodiment of the present disclosure.
FIG 18 is a schematic view of connection between a coil winding and a control circuit board according to an embodiment of the present disclosure.
FIG 19 is a schematic structural view of a cooking utensil according to an embodiment of the present disclosure.
FIG 20 is a schematic structural view of the coil disk according to another embodiment of the present disclosure.
FIG 21 is a schematic structural view of an outer magnetic strip in FIG 20.
FIG 22 is a schematic structural view of an inner magnetic strip in FIG 20.
FIG 23 is a schematic structural view of the coil disk according to yet another embodiment of the present disclosure.
FIG 24 is a schematic structural view of FIG 23 from another perspective.
FIG 25 is a schematic internal structural view of FIG. 23.
FIG 26 is a schematic structural view of the coil disk according to still another embodiment of the present disclosure.

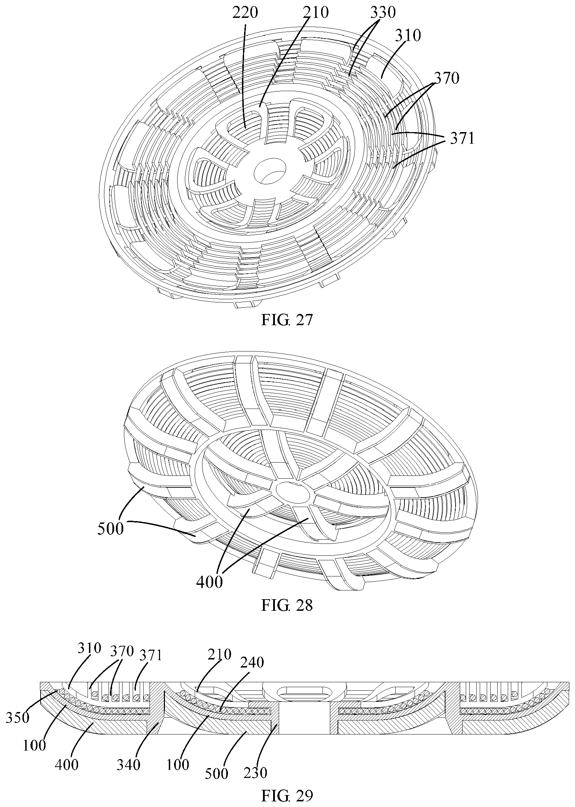

FIG 27 is a schematic structural view of FIG 26 after installing the coil winding.
FIG 28 is a schematic structural view of FIG 27 from another perspective.
FIG 29 is a schematic internal structural view of FIG. 27.

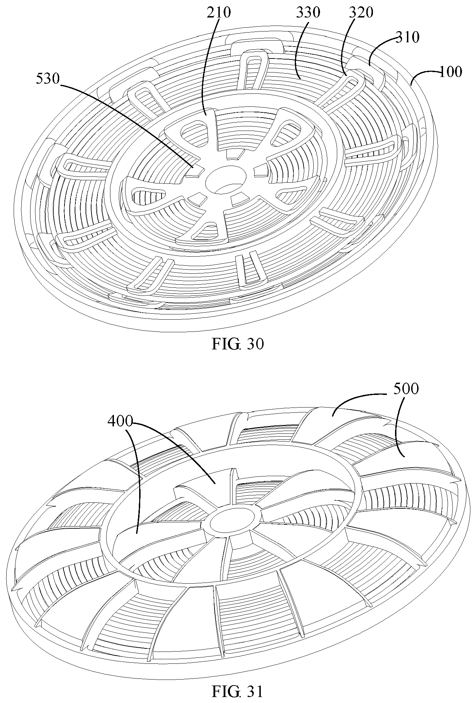

FIG 30 is a schematic structural view of the coil disk according to another embodiment of the present disclosure.
FIG 31 is a schematic structural view of FIG 30 from another perspective.

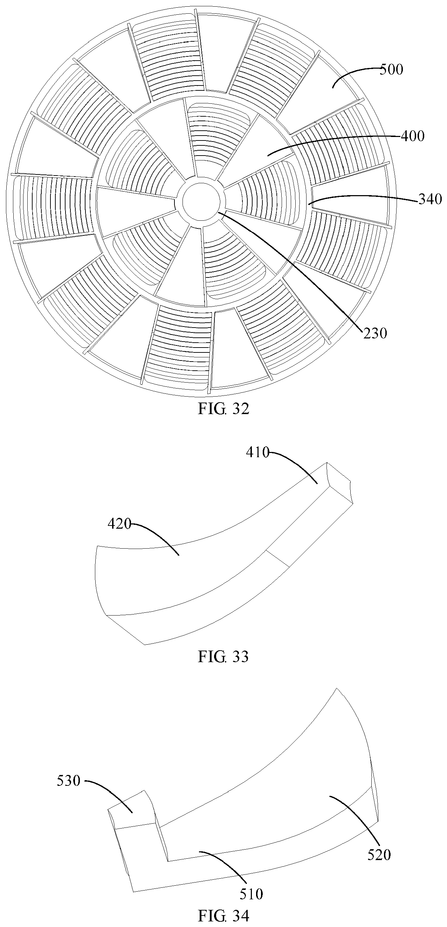

FIG 32 is a schematic rear structural view of FIG 30.
FIG 33 is a schematic structural view of an outer magnetic strip in FIG 30.
FIG 34 is a schematic structural view of an inner magnetic strip in FIG 30.
FIG 35 is a schematic structural view of a coil disk base according to an embodiment of the present disclosure.
FIG 36 is a schematic structural view of FIG 35 from another perspective.
FIG 37 is a partial enlarged view of portion A in FIG 36.
FIG 38 is a partial schematic structural view of a base of the coil disk base of the present disclosure.
FIG 39 is a schematic structural view of a disk base of the coil disk according to the present disclosure.
FIG 40 is a schematic structural view of the coil disk base without winding the coil according to the present disclosure.
FIG 41 is a partial enlarged view of portion B in FIG. 40.
FIG 42 is a partial enlarged view of portion C in FIG. 40.
FIG 43 is a schematic structural view of the coil disk base with winding the coil according to the present disclosure.
FIG 44 is a partial enlarged view of portion D in FIG. 43.
FIG 45 is a partial enlarged view of portion E in FIG. 43.
FIG 46 is a schematic structural view of the coil disk according to another embodiment of the present disclosure.
FIG 47 is a partial enlarged view of portion F in FIG 46.
FIG 48 is a schematic structural view of the coil disk according to yet another embodiment of the present disclosure.
FIG 49 is a schematic cross-sectional structural view taken along A-A in FIG 48.
] FIG 50 is a schematic structural view of the coil disk according to still another embodiment of the present disclosure.
FIG 51 is a partial enlarged view of portion G in FIG. 50.
FIG 52 is a schematic cross-sectional structural view taken along B-B in FIG. 50.
FIG 53 is a schematic structural view of a cooking utensil according to an embodiment of the present disclosure.
FIG 54 is a partial enlarged view of portion H in FIG. 53.
FIG 55 is a schematic structural view of the cooking utensil according to another embodiment of the present disclosure.
FIG 56 is a partial enlarged view of portion I in FIG 55 according to an embodiment.
FIG 57 is a partial enlarged view of portion I in FIG 55 according to another embodiment.
FIG 58 is a schematic structural view of a coil disk base according to an embodiment of the present disclosure.
FIG 59 is a schematic structural view of the coil winding and a magnetic strip holder according to an embodiment.
FIG 60 is a schematic structural front view of FIG 59.
FIG 61 is a schematic structural front view of the coil winding (including a first coil winding and a second coil winding) and the magnetic strip holder according to another embodiment.
FIG 62 is a schematic structural front view of the coil winding and the magnetic strip holder according to still another embodiment.
FIG 63 is a schematic structural view of the coil winding according to an embodiment.
FIG 64 is a schematic structural view of the coil winding according to another embodiment.
FIG 65 is a schematic structural view of the disk base and the cooking utensil after installation according to an embodiment.
FIG 66 is a schematic structural sectional view of FIG. 65.
FIG 67 is a schematic structural view of the disk base and the heating device after installation according to another embodiment.

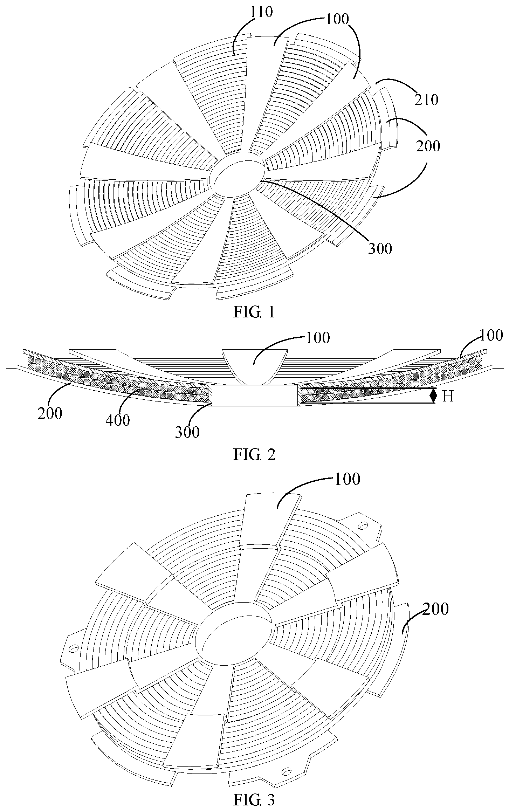

The following table is the description of reference signs of FIG 1 to FIG 19 in the specification (the description of reference signs of other figures can refer to the content of the corresponding part in the specific embodiment):

| reference sign | name | reference sign | name |
|---|---|---|---|
| 100 | first clamping rib | 110 | first gap |
| 120 | limit piece | 121 | first inner clamping rib |
| 122 | first outer clamping rib | 160 | first heat dissipation opening |
| 200 | second clamping rib | 210 | second gap |
| 220 | inner coil winding | 221 | second inner clamping rib |
| 222 | second outer clamping rib | 300 | support structure |
| 310 | inner support structure | 320 | outer support structure |
| 400 | first clamping gap | 410 | inner clamping gap |
| 411 | third winding gap | 412 | fourth winding gap |
| 420 | outer clamping gap | 421 | first winding gap |
| 422 | second winding gap | 430 | second clamping gap |
| 450 | opening | 500 | coil support |
| 600 | magnetic strip | 700 | base |
| 800 | coil winding | 810 | first coil winding |
| 820 | second coil winding | 830 | third coil winding |
| 840 | fourth coil winding | 850 | inner arc section |
| 860 | transition section | 870 | outer arc section |

The realization of the objective, functional characteristics, and advantages of the present disclosure are further described with reference to the accompanying drawings.

### DETAILED DESCRIPTION OF THE EMBODIMENTS

The technical solutions of the embodiments of the present disclosure will be described in more detail below with reference to the accompanying drawings. It is obvious that the embodiments to be described are only some rather than all of the embodiments of the present disclosure. All other embodiments obtained by persons skilled in the art based on the embodiments of the present disclosure without creative efforts shall fall within the scope of the present disclosure.

It should be noted that if there is a directional indication (such as up, down, left, right, front, rear...) in the embodiments of the present disclosure, the directional indication is only used to explain the relative positional relationship, movement, etc. of the components in a certain posture (as shown in the drawings). If the specific posture changes, the directional indication will change accordingly.

It should be noted that, the descriptions associated with, e.g., "first" and "second," in the present disclosure are merely for descriptive purposes, and cannot be understood as indicating or suggesting relative importance or impliedly indicating the number of the indicated technical feature. Therefore, the feature associated with "first" or "second" can expressly or impliedly include at least one such feature. Besides, the meaning of "and/or" appearing in the disclosure includes three parallel scenarios. For example, "A and/or B" includes only A, or only B, or both A and B. In addition, the technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is it within the scope of the present disclosure.

The present disclosure mainly provides a coil disk, which is mainly used in cooking utensil to increase the stability and reliability when installing the coil, and avoid using glue during the fixing process of the coil and avoid generating peculiar smell during the use of the coil disk. Meanwhile, the clamping rib has different shapes, such that the coil disk can be applied to different working platforms to heat different cookware. By improving the structure in the clamping gap, the arrangement shape, size, relative position relationship, etc. of the coil windings 800 located in the clamping gap can be changed as desired, so that the heating of the coil disk is more uniform.

The specific structure of the coil disk will be mainly described below.

As shown in FIG. 1 to FIG 6, in the embodiment of the present disclosure, the coil disk includes:
a support structure 300 located in a middle of the coil disk;
a first clamping rib 100, one end of the first clamping rib 100 being connected to the support structure 300, another end of the first clamping rib 100 extending in a direction away from the support structure 300; and
a second clamping rib 200 located below the first clamping rib 100, one end of the second clamping rib 200 being connected to the support structure 300, another end of the second clamping rib 200 extending in a direction away from the support structure 300;
the first clamping rib 100, the second clamping rib 200, and the support structure 300 are enclosed to form a first clamping gap for winding the an enameled wire.

The support structure 300 can have many shapes, taking a columnar shape as an example. The cross section of the support structure 300 may be triangular, circular, elliptical, square, etc., taking a circular shape as an example. The support structure is located in the middle of the coil disk. It can be understood that the support structure is provided in the middle area of the entire coil disk, and is not limited by the specific shape and composition of the coil disk (either a whole coil disk or a coil disk composed of multiple sub-coil disks). The first clamping rib 100 and the second clamping rib 200 are provided on a side wall of the support structure 300. According to the invention, the first clamping rib 100 and the second clamping rib 200 are integrally formed with the support structure 300.

The shape and structure of the first clamping rib 100 can be the same as or different from the shape and structure of the second clamping rib 200, as long as the first clamping gap 400 can be formed between the first clamping rib 100 and the second clamping rib 200. The following takes the introduction of the first clamping rib 100 as an example. The second clamping rib 200 is matched with the first clamping rib 100 to form the required first clamping gap 400.

The first clamping rib 100 can have many shapes, and different shapes can be set according to different shapes of pots, so that the coil winding 800 in the first clamping gap 400 is adapted to the shape of the pot. The shape of the first clamping rib 100 can also be set according to the requirements of different working conditions. In this embodiment, the elongated shape is taken as an example. One end of the first clamping rib 100 is fixedly connected to the support structure 300, another end of the first clamping rib 100 can extend in a direction away from the support structure 300, and can extend in a direction perpendicular to the length of the support structure 300, or extend obliquely upward or obliquely downward. The specific extension method is determined according to specific working conditions or actual needs. The first clamping rib 100 and the second clamping rib 200 are made of insulating hard material and hard plastic.

In order to improve the winding effect, the coil disk includes a plurality of first clamping ribs 100, and the plurality of first clamping ribs 100 are radially distributed along a circumferential direction of the support structure 300; and/or the coil disk includes a plurality of second clamping ribs 200, and the plurality of second clamping ribs 200 are radially distributed along the circumferential direction of the support structure 300, such that the clamping gaps are distributed along the circumferential direction of the support structure 300. That is, one end of each of the plurality of first clamping ribs 100 is connected to the support structure 300, and the other end of each of the plurality of first clamping ribs 100 is centered on the support structure 300 and radially distributed. Similarly, one end of the plurality of second clamping ribs 200 is connected to the support structure 300, and the other end of the second clamping ribs 200 is centered on the support structure 300 and radially distributed. In this way, the first clamping gap 400 is along the circumference of the support structure 300, so that when the enameled wire is wound into the first clamping gap 400, it can be clamped in multiple positions, thereby improving the stability of the enameled wire being clamped.

As for the relative position relationship of the first clamping rib 100 and the second clamping rib 200, the second clamping rib 200 is located below the first clamping rib 100, which can include multiple situations, and different situations can be set according to different needs. In the first situation, the second clamping rib 200 is located directly below the first clamping rib 100, and the cross section of the first clamping gap 400 is in an inverted U shape. In the second situation, a part of the second clamping rib 200 is located directly below the first clamping rib 100, and a part is located directly below the gap between two adjacent first clamping ribs 100. In the third situation, the second clamping rib 200 is completely located directly below the gap between two adjacent first clamping ribs 100, and the projections of the first clamping rib 100 and the second clamping rib 200 in the horizontal plane do not intersect. The following takes the third case as an example for specific explanation:

There is a first gap 110 between two adjacent first clamping ribs 100. There is a second gap 210 between adjacent second clamping ribs 200. The second clamping rib 200 is located between two adjacent first clamping ribs 100 corresponding to the first gap 110. The first clamping rib 100 is located between two adjacent second clamping ribs 200 corresponding to the second gap 210. When the first clamping rib 100, the second clamping rib 200 and the support structure 300 are integrally injection-molded, it is favorable for demolding. The two sides of the coil winding 800 are supported at intervals (the first clamping rib 100 and the second clamping rib 200 are alternately supported), so that the coil winding 800 is clamped more stably.

The number of layers of enameled wire in the first clamping gap 400 can be set according to requirements. Specifically, the number of layers of the coil winding 800 wound in the clamping gap is 2 to 5 layers. Too few layers are not conducive to improving the working efficiency of the coil disk, and too many layers are not conducive to the stability of the winding of the coil winding 800. Regarding the distance between the first clamping rib 100 and the second clamping rib 200, that is, the height H of the clamping gap is 2 nm to 20 mm. If the clamping gap is too small, it is not conducive to the entry and winding of the enameled wire, and if the gap is too large, it is not conducive to the stability of the enameled wire after winding.

In this embodiment, a first clamping gap 400 is formed between the first clamping rib 100 and the second clamping rib 200, and the enameled wire is wound in the winding gap, such that the coil is clamped by the first clamping rib 100 and the second clamping rib 200, so as to realize the fixation of the coil. Compared with the existing fixing method, the fixing of the coil does not require the use of glue, so that no peculiar smell will be generated when the coil is heated, which is beneficial to the user's use. Besides, the efficiency of winding and fixing the coil in this way is greatly increased, and the stability of the coil after winding is greatly increased. It is worth noting that since the first clamping rib 100 and the second clamping rib 200 both have free ends, the movement of the first clamping rib 100 and the second clamping rib 200 is more flexible. When the coil is wound into the first clamping gap, it is beneficial to the entry and clamping of the coil, especially when the multi-layer coil is provided, it is beneficial to the arrangement of the coil in the first clamping gap.

It is worth noting that, in some embodiments, the plurality of second clamping ribs 200 are connected to the support structure 300 and combined to form a coil support 500 for installation of the coil winding 800. In some embodiments, in order to improve the stability of the coil support 500, the adjacent second clamping ribs 200 are connected to each other, and there may be many connection positions, and the connection position being the ends away from the support structure 300 is taken as an example.

In some embodiments, in order to improve the stability of the enameled wire being clamped, a width of the first clamping rib 100 gradually increases outward from the support structure 300; and/or a width of the second clamping rib 200 gradually increases outward from the support structure 300. In this embodiment, the width of the first clamping rib 100 may be increased, or the width of the second clamping rib 200 may be increased. It is also possible that the widths of the first clamping rib 100 and the second clamping rib 200 are increased at the same time. The first clamping rib 100 and the second clamping rib 200 are in a sheet shape. As the distance between the first clamping rib 100 and the second clamping rib 200 is farther from the support structure 300, the width of the first clamping rib 100 and the second clamping rib 200 becomes larger. In this way, the area where the first clamping rib 100 and the second clamping rib 200 clamp the coil winding 800 gradually increases as the diameter of the coil winding 800 increases. As such, it is beneficial to increase the stability of the first clamping gap 400 to clamp the coil winding 800.

In order to improve the working stability of the coil disk, and reduce the temperature of the coil disk when it is working, the first clamping rib 100 is provided with a first heat dissipation opening; and/or, the second clamping rib 200 is provided with a second heat dissipation opening. The first heat dissipation opening is opened along a length direction of the first clamping rib 100, and the second heat dissipation opening is opened along a length direction of the second clamping rib 200. There can be many shapes of the first heat dissipation opening and the second heat dissipation opening, such as a long strip, a circular shape, a polygonal shape, and the like. The first heat dissipation opening and the second heat dissipation opening enable the heat to be dissipated in time when the coil disk is working, so as to prevent the coil disk from being too high in temperature and affecting the operation of the coil disk.

In some embodiments, in order to improve the compactness of the structure, a side of the second clamping rib 200 away from the first clamping rib 100 is provided with a mounting groove for the magnetic strip 600 to be installed. It is worth noting that the groove width and/or groove depth of the mounting groove gradually increase along the extension direction of the first clamping gap 400 (from the support structure 300). In this way, the mounting groove can be installed with the magnetic strip 600 gradually wider or thicker, so as to generate a stronger magnetic field in the peripheral part of the coil disk. In this way, the magnetic strip 600 can be conveniently installed on the coil disk and adapted to the winding of the coil (by gradually increasing the width of the magnetic strip 600 to reduce the tendency of the gap between two adjacent magnetic strip 600 to increase as the diameter of the coil disk increases), so that the heating of the coil disk is more uniform.

The first clamping gap 400 can have different shapes to meet different requirements. Give a few examples to illustrate, the first clamping rib 100 and the second clamping rib 200 have straight sections, and a radial cross section of the first clamping gap 400 has a straight section; and/or the first clamping rib 100 and the second clamping rib 200 have stepped sections, and a radial cross section of the first clamping gap 400 has a stepped section; and/or the first clamping rib 100 and the second clamping rib 200 have arc-shaped curved sections, and a radial cross section of the first clamping gap 400 has an arc curved section.

In this embodiment, the first clamping gap 400 can be all straight sections or partly straight sections; can be all stepped sections or partly stepped sections; can be all arc-shaped curved sections or partly arc-shaped curved sections. When the first clamping rib 100 and the second clamping rib 200 are both straight clamping ribs, the first clamping gap 400 is a straight clamping gap. When the coil is wound into the first clamping gap 400, the coil is in a straight circle (the number of coil layers is the same).

When the first clamping rib 100 and/or the second clamping rib 200 is a stepped plate, the first clamping gap 400 is a stepped gap, and the number of layers of the coil is different. There can be many positions where there are many layers of coils, including the inside, middle and outside of the ring. Taking the multi-layer arrangement on the outside as an example, this arrangement makes the coils on the outside of the coil disk more. It can compensate for the weaker average magnetic field outside the coil disk (as the diameter of the coil disk increases, the gap between adjacent magnetic strips 600 also gradually increases. As a result, the magnetic field strength gradually weakens in the area where the coils between the magnetic strips 600 are located) and the heating efficiency is not high, so that the inner and outer sides of the coil disk are heated evenly during the working process.

There may be many forms of the first clamping rib 100 and the second clamping rib 200 that make the first clamping gap 400 curved in an arc shape. The first clamping rib 100 is in an arc shape (the coils are arranged along the length direction of the first clamping rib 100). The second clamping rib 200 is in an arc shape (the coils are arranged along the length direction of the second clamping rib 200). Both the first clamping rib 100 and the second clamping rib 200 are in an arc shape (the coils are arranged along the length direction of the first clamping rib 100 or the second clamping rib 200). Taking the first clamping rib 100 and the second clamping rib 200 as an example, the curves of the first clamping rib 100 and the second clamping rib 200 are equivalent, so that the bending and extending direction of the first clamping gap 400 is the same as the extending direction of the first clamping rib 100 and the second clamping rib 200. The first clamping gap 400 is uniformly arranged (that is, the width of the entire first clamping gap 400 is equivalent), which facilitates the uniform clamping of the enameled wire, and thus facilitates the uniform operation of the coil disk.

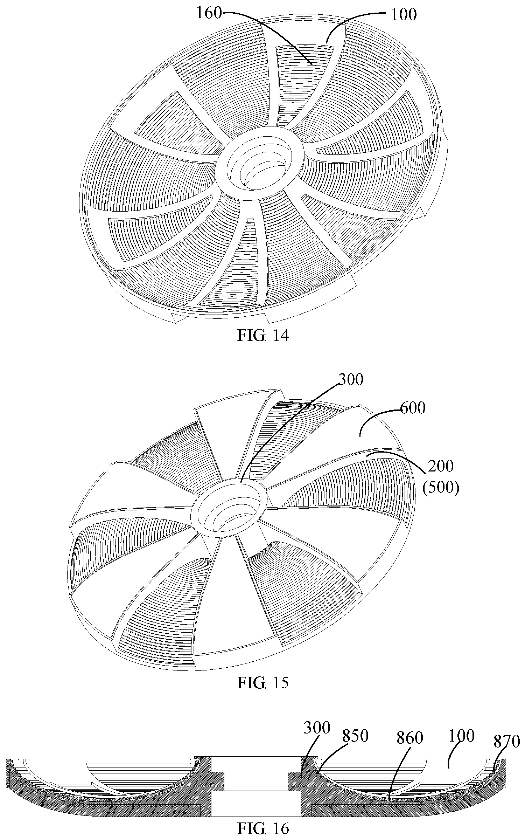

In some embodiments, as shown in FIG 14 to FIG. 16, in order to further improve the efficiency and uniformity of heating the coil disk, the first clamping gap 400 includes an inner arc section 850 which is bent and extended from the support structure 300 downward. The inner arc section 850 can have many forms, such as a concave arc, or a convex arc, or both concave and convex arcs. The first clamping gap 400 includes an inner arc section 850, and the density of the enameled wire (the number of turns of the enameled wire per unit radial dimension) of the inner arc section 850 is increased, which is beneficial to increase the efficiency of the middle of the coil disk. Normally, the magnetic field strength in the middle of the coil plate disk is stronger. More coils is beneficial to making full use of the strong magnetic field strength, thereby improving the working efficiency of the coil disk. The inner arc section 850 is set as a concave arc as an example, so that the enameled wire density (the number of enameled wires per unit radial dimension) of the inner arc section 850 is gradually reduced along the radial direction of the coil disk. That is, the coil density near the support structure 300 in the inner arc section 850 is relatively strong, and this arrangement is adapted to the tendency of the magnetic field strength to gradually weaken from the middle to the periphery, so as to further make full and reasonable use of the magnetic field strength. When the outer side of the coil disk is provided with multi-layer coils or the magnetic field intensity is greater than the inner side, the heating efficiency of the inner side of the coil disk (inner arc section 850) is increased, which is beneficial to improve the heating uniformity of the entire coil disk.

In order to further improve the working efficiency of the coil disk, by setting the shape of the first clamping gap 400, the coil winding 800 wound in the first clamping gap 400 has the function of magnetization, so as to make full use of the magnetic field to improve the working efficiency of the coil disk. Specifically, the first clamping gap 400 further includes a transition section 860 and an outer arc section 870. The inner arc section 850 forms a concave arc downward from the support structure 300. The outer arc section 870 forms a concave arc upward from the transition section 860. The inner arc section 850 and the outer arc section 870 are transitionally connected by a circular arc of the transition section 860. The transition section 860 may be a straight section or a concave arc section. Through the arrangement of the inner arc section 850, the outer arc section 870, and the transition section 860, the first clamping gap 400 is first gradually reduced and then gradually increased during the process of extending from the support structure 300 (the middle part of the coil disk) to the surroundings. It also makes the coil density in the winding and the first clamping gap 400 gradually decrease first, and then gradually increase. When the magnetic field passes through the coil winding 800 in this way, the magnetic field passing through the coil is fully utilized, thereby effectively improving the working efficiency and uniformity of the coil disk.

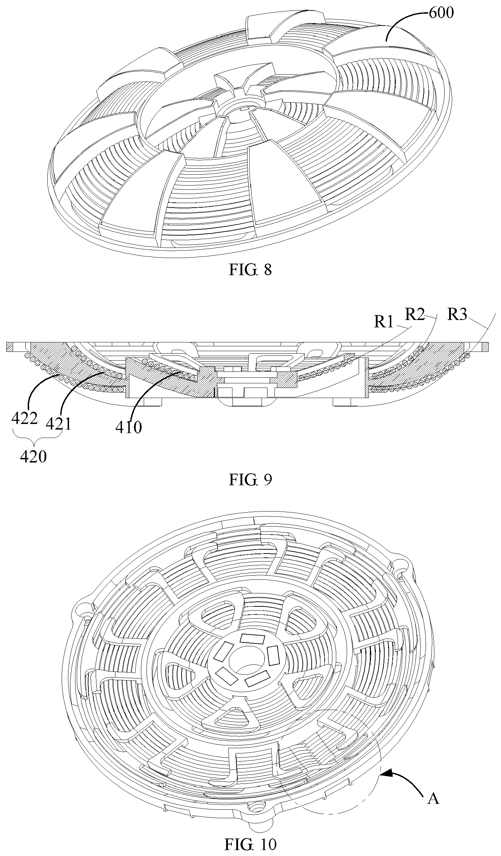

In some embodiments, as shown in FIG. 10 to FIG. 12, in order to further improve the working uniformity of the coil disk, the coil disk further includes a coil support 500 located below the second clamping rib 200, and the second clamping rib 200, the coil support 500 and the support structure 300 are enclosed to form a second clamping gap 430; the first clamping gap is in communication with the second clamping gap 430 through an opening 450; and during winding process of the enameled wire of the coil disk, when passing through the opening 450, the enameled wire enters from the clamping gap to the second clamping gap 430, or enters from the second gap 210 to the clamping gap, such that the enameled wire is alternately wound between the clamping gap and the second clamping gap 430 through the opening 450.

Specially, in this embodiment, the second clamping rib 200 is located below the gap between two adjacent first clamping ribs 100, that is, the first clamping rib 100 and the second clamping rib 200 partially overlap or do not overlap in the up-down direction. There is a gap between the second clamping rib 200 and the coil support 500. Since the second clamping ribs 200 are distributed at intervals along the circumferential direction of the support structure 300, the first clamping gap 400 communicates with the second clamping gap 430 through a gap between two adjacent second clamping ribs 200, that is, the number of openings 450 can be multiple. During the winding process of the coil winding 800, the clamping gap can be switched at each opening 450 (switched between the first clamping gap 400 and the second clamping gap 430), or the clamping gap can be switched only at the same opening 450. The coil winding 800 can switch the clamping gap every time it is wound, the coil winding 800 can also be switched to another clamping gap after winding multiple turns, and switched back to the original clamping gap after winding multiple turns in another clamping gap to continue winding.

Taking the switching of the clamping gap every time the same opening 450 is passed as an example, the opening 450 is along the radial direction of the coil disk. Each time passing through the opening 450, the enameled wire enters from the first clamping gap 400 to the second clamping gap 430, or from the second gap 210 to the first clamping gap 400. In this way, the coils in the first clamping gap 400 and the second clamping gap 430 are wound sequentially and alternately. Taking winding in the first clamping gap 400 as an example, when passing through the opening 450, the coil enters the second clamping gap 430 from the first clamping gap 400, and after winding it once in the second clamping gap 430, returns to the first clamping gap 400 through the same opening 450 to continue winding, and thus alternately reciprocates. By winding the coil winding 800 in this way, the coils in the first clamping gap 400 and the second clamping gap 430 are evenly wound, thereby greatly improving the uniformity of the coil disk during operation, and avoiding that after winding a clamping gap (taking the first clamping gap 400 as an example), a transition section 860 must be set to enter another gap (taking the second clamping gap 430 as an example) to continue winding. Thus, the existence of the transition section 860 is completely avoided, so that the winding of the double-layer coil is more compact and regular, and the work uniformity is better.

In some embodiments, in order to further improve the working efficiency and uniformity of the coil disk, the coil disk includes an inner ring heating zone and an outer ring heating zone. The first clamping gap 400 includes an inner clamping gap 410 located in the inner ring heating zone and an outer clamping gap 420 located in the outer ring heating zone, and the inner clamping gap 410 and the outer clamping gap 420 are upwardly inclined and have different inclination angles. It is worth noting that in this embodiment, only two heating zones are used as an example for description. In other embodiments, it may include three, four or even more heating zones. The positional relationship between the multiple heating zones can be reasonably deduced with reference to the inner ring heating zone and the outer ring heating zone in this embodiment. It should be understood that the technical solution for multiple heating zones is based on the two heating zones in this embodiment and should fall within the protection scope of the present disclosure.

In this embodiment, the coil disk includes at least two heating zones. One is the inner ring heating zone located in the center of the coil disk. The inner ring heating zone can be circular or toroidal. The other is the outer ring heating zone around the inner ring heating zone, and the outer ring heating zone is toroidal. The inner ring heating zone and the outer ring heating zone are respectively heated by different coil windings 800, so that an inner clamping gap 410 and an outer clamping gap 420 are respectively provided.

It is worth noting that the starting point for the upward tilting of the inner clamping gap 410 and the outer clamping gap 420 is the support structure 300, that is, the support structure 300 is inclined upward away from the support structure 300. There are many ways of tilting, which can be a straight line tilting or an arc tilting. Taking the concave arc tilting as an example, the inclination angle of the inner ring gap is different from the inclination angle of the outer ring gap (the slope is different when inclined in a straight line, and the curvature is different when inclined in an arc). The distance between the coil of the coil disk and the heated pot is diversified, so that the heating of the coil disk has higher adaptability (can be adapted to a variety of different working conditions) and better uniformity.

In some embodiments, in order to further improve the adaptability and uniformity of the coil disk, the outer clamping gap 420 includes a first winding gap 421 and a second winding gap 422 up and down, and the inclination angles of the first winding gap 421 and the second winding gap 422 are different. In this embodiment, the first winding gap 421 and the second winding gap 422 in the outer ring heating zone are stacked. Moreover, the inclination angles of the two are different, which further enriches the distance between the coil winding 800 and the pot, and improves the adaptability and uniformity.

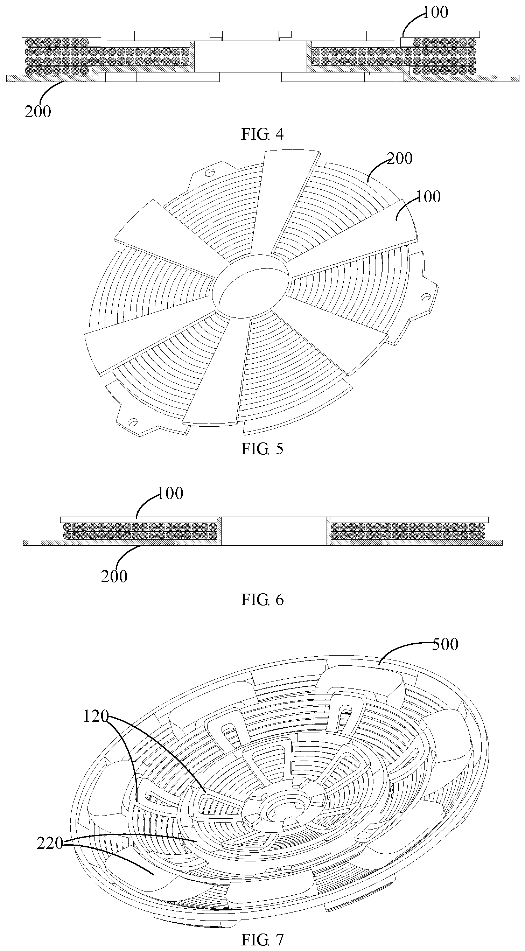

Regarding the difference of the inclination angle, when the inclination way is arc-shaped, the curvature of the arc-shaped inclination is different. As shown in FIG 7 to FIG 9, the extension lines of the straight lines where the inner clamping gap 410, the first winding gap 421, and the second winding gap 422 locate are shown, the curvatures R1, R2, and R3 of each extension line are different.

It is worth noting that during the use of the coil disk, the coil windings 800 in the first winding gap 421 and the second winding gap 422 can be connected in series or in parallel, or can work independently of each other. The coil winding 800 in the first winding gap 421 and the coil winding 800 in the second winding gap 422 can be selectively used according to specific working conditions. The coil windings 800 in the first winding gap 421 and the second winding gap 422 are connected in series or parallel and used at the same time.

The following provides a specific structural solution for realizing the above embodiment.

The support structure 300 includes an inner support structure 310 located in the inner ring heating zone and an outer support structure 320 located in the outer ring heating zone;
the first clamping rib 100 includes a first inner clamping rib 121 and a first outer clamping rib 122, and the second clamping rib 200 includes a second inner clamping rib 221 and a second outer clamping rib 222;
the first inner clamping rib 121 and the second inner clamping rib 221 are inclined upward from the inner support structure 310 in a direction towards the outer ring heating zone, to form an inner clamping gap 410 between the first inner clamping rib 121 and the second inner clamping rib 221;
the first outer clamping rib 122 and the second outer clamping rib 222 are inclined upward from the outer support structure 320 in a direction away from the inner ring heating zone, to form an outer clamping gap 420 between the first outer clamping rib 122 and the second outer clamping rib 222.

It is worth noting that in other embodiments, the number of support structures can be adjusted according to the partitioning of the heating zones. In this embodiment, only the basic inner and outer support structures are used for description. It should be understood that the technical solutions of multiple support structures are based on the inner and outer support structures in this embodiment, and should fall within the protection scope of the present disclosure.

The inner support structure 310 is cylindrically provided in the center of the coil disk, the outer support structure 320 is around the outer side of the inner support structure 310, and there is a gap between the inner support structure 310 and the outer support structure 320. The first inner clamping rib 121 and the second inner clamping rib 221 extend from the inner support structure 310 to the outer support structure 320. The first inner clamping rib 121 is located above the second inner clamping rib 221 (there are many forms on the top, including straight, completely staggered, and partially staggered situations. For details, please refer to the above embodiment). The first inner clamping rib 121 and the second inner clamping rib 221 may be in a linear shape, or may be in a long arc shape, so that the first inner clamping gap 410 can be inclined upward.

Similarly, the first outer clamping rib 122 and the second outer clamping rib 222 extend from the outer support structure 320 to the inner support structure 310. The first outer clamping rib 122 is located above the second outer clamping rib 222 (there are many forms on the top, including straight, completely staggered, and partially staggered situations. For details, please refer to the above embodiment). The first outer clamping rib 122 and the second outer clamping rib 222 may be in a linear shape, or may be in a long arc shape, so that the first outer clamping gap 420 can be inclined upward. The outer support structure 320 has a circular ring shape. The plurality of first outer clamping ribs 122 and the second outer clamping ribs 222 are arranged along the circumference of the outer support structure 320.

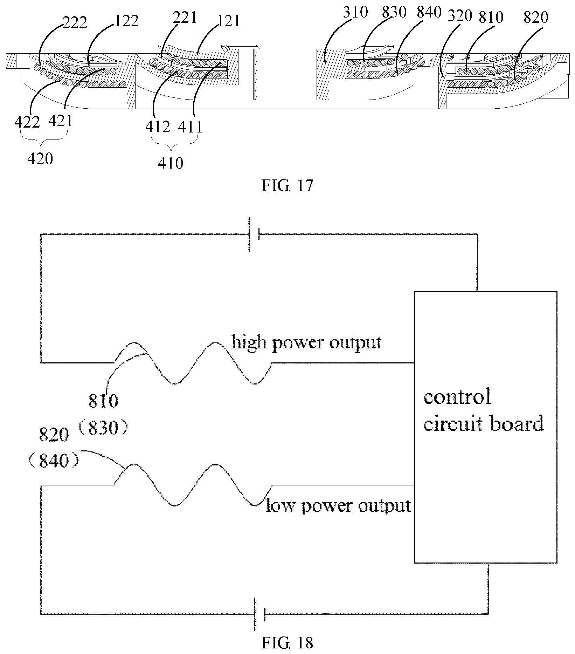

In some embodiments, as shown in FIG 17 to FIG. 20, in order to further improve the adaptability of the coil disk and increase the energy utilization rate of the coil disk, the coil disk includes an inner ring heating zone and an outer ring heating zone; the clamping gap includes an inner clamping gap 410 located in the inner ring heating zone and an outer clamping gap 420 located in the outer ring heating zone; the outer clamping gap 420 includes a first winding gap 421 and a second winding gap 422 that are arranged along the up-down direction, and/or the inner clamping gap 410 includes a third winding gap 411 and a fourth winding gap 412 that are arranged along the up-down direction; the first winding gap 421 and the second winding gap 422 are respectively provided with a first coil winding 810 and a second coil winding 820; and/or the third winding gap 411 and the fourth winding gap 412 are respectively provided with a third coil winding 830 and a fourth coil winding 840.

In this embodiment, the inner ring heating zone of the coil disk can be a single layer or multiple layers. Taking two layers as an example, a third winding gap 411 and a fourth winding gap 412 are respectively provided. A third coil winding 830 is wound in the third winding gap 411, and a fourth coil winding 840 is wound in the fourth winding gap 412. Similarly, the outer ring heating zone of the coil disk can be a single layer or multi layers. Taking two layers as an example, a first winding gap 421 and a second winding gap 422 are respectively provided. A first coil winding 810 is wound in the first winding gap 421, and a second coil winding 820 is wound in the second winding gap 422.

Regarding the relationship between the coil winding 800:
The first coil winding 810 and the second coil winding 820 are independent of each other. Alternatively, the first coil winding 810 and the second coil winding 820 are connected in series. Alternatively, the first coil winding 810 and the second coil winding 820 are connected in parallel. The third coil winding 830 and the fourth coil winding 840 are independent of each other. Alternatively, the third coil winding 830 and the fourth coil winding 840 are connected in series. Alternatively, the third coil winding 830 and the fourth coil winding 840 are connected in parallel. In some embodiments, according to special needs, the first coil winding 810 and the third coil winding 830 (or the fourth coil winding 840) can be connected in series or in parallel, the second coil winding 820 and the third coil winding 830 (or the fourth coil winding 840) can also be connected in series or in parallel.

Since the coil windings 800 of different layers have different distances between the heated pots, the coils at different positions are adapted to different heating requirements of the pots. Specifically, in order to meet the requirements of different working conditions, the inner ring heating zone and the outer ring heating zone can be optionally used, and the inner ring heating zone and the outer ring heating zone can be used at the same time. The following is a specific description from the perspective of the heating position and the large and small power of the coil disk.

When only the middle part needs to be heated, the third coil winding 830 and the fourth coil winding 840 are selected, or the third coil winding 830 and the fourth coil winding 840 are used in series or in parallel. The power is larger when only the third coil winding 830 is used, and the power is smaller when only the fourth coil winding 840 is used. The power when the third coil winding 830 and the fourth coil winding 840 are used in parallel is greater than the power when the third coil winding 830 is used alone.

When only the periphery needs to be heated, the first coil winding 810 and the second coil winding 820 are selected, or the first coil winding 810 and the second coil winding 820 are used in series or in parallel. The power is larger when only the first coil winding 810 is used, and the power is smaller when only the second coil winding 820 is used. The power when the first coil winding 810 and the second coil winding 820 are used in parallel is greater than the power when the first coil winding 810 is used alone.

When heating is needed in the middle and the periphery, a set of coil winding 800 is selected for the inner ring heating zone and the outer ring heating zone to work together. For example, the third coil winding 830 is selected, and the first coil winding 810 and the second coil winding 820 are used in parallel.

In order to improve the intelligent and convenient control of the coil winding 800, the coil disk includes a control circuit board, a first switching circuit is provided on the control circuit board, and the first switching circuit is respectively connected with the first coil winding 810 and the second coil winding 820 to switch a connection relationship between the first coil winding 810 and the second coil winding 820; and/or a second switching circuit is provided on the control circuit board, and the second switching circuit is respectively connected with the third coil winding 830 and the fourth coil winding 840 to switch a connection relationship between the third coil winding 830 and the fourth coil winding 840. In this embodiment, by setting the first switching circuit, the first coil winding 810 can be controlled to work, or the second coil winding 820 can be controlled to work, or the first coil winding 810 and the second coil winding 820 work in series or in parallel according to requirements. Similarly, by setting the second switching circuit, the third coil winding 830 can be controlled to work, or the fourth coil winding 840 can be controlled to work, or the third coil winding 830 and the fourth coil winding 840 work in series or in parallel according to requirements. In some embodiment, the first switching circuit and the second switching circuit are controlled by the main control circuit on the control circuit board. The main control circuit can coordinate the work of the first switching circuit and the second switching circuit according to instructions or requirements, so that the coil disk works as required.

In some embodiments, in order to further improve the energy utilization rate of the coil disk and prolong the service life of the Insulated Gate Bipolar Transistor (IGBT) on the control circuit board, the coil disk further includes:
a first inductor L1 and a first resistor R1 configured with the first coil winding 810, a second inductor L2 and a second resistor R2 configured with the second coil winding 820, a third inductor L3 and a third resistor R3 configured with the third coil winding 830, and a fourth inductor L4 and a fourth resistor R4 configured with the fourth coil winding 840;
a first inductance value of the first inductor L1 is smaller than a second inductance value of the second inductor L2 and/or a fourth inductance value of the fourth inductance L4;
a first resistance value of the first resistor R1 is greater than a second resistance value of the second resistor R2 and/or a fourth resistance value of fourth resistor R4;
a third inductance value of the third inductor L3 is smaller than a fourth inductance value of the fourth inductor L4 and/or a second inductance value of the second inductor L2; and
a third resistance value of the third resistor R3 is greater than a fourth resistance value of the fourth resistor R4 and/or a second resistance value of the second resistor R2.

In this embodiment, the first coil winding 810 is located above the second coil winding 820, the third coil winding 830 is located above the fourth coil winding 840, such that the first coil winding 810 and the third coil winding 830 are suitable for higher power operation, and the second coil winding 820 and the fourth coil winding 840 are suitable for lower power operation. It is necessary to configure the first coil winding 810 with a smaller first inductance L1 and a larger first resistance R1, and configure the second coil winding 820 with a smaller second inductance L2 and a smaller second resistance R2. That is L1<L2, R1>R2. In the same way, it is necessary to configure the third coil winding 830 with a smaller third inductance L1 and a larger third resistance R1, and configure the fourth coil winding 840 with a smaller fourth inductance L4 and a smaller fourth resistance R4. That is, L3<L4, R3>R4. As such, different coil windings 800 can be selected according to different work requirements, and different coil windings 800 are configured with inductances and resistances adapted to them, so that the corresponding coil windings 800 can be adapted to work requirements. In this way, while making full and reasonable use of electric energy, it also prevents the IGBT on the control circuit board from generating a higher temperature, so as to increase the operating temperature of the IGBT and help to extend the service life of the IGBT. The way to configure the inductance can be achieved by setting the number of turns of the coil winding 800, the more the number of coil turns, the greater the inductance, and the less the number of coil turns, the smaller the inductance. Therefore, the number of turns of the first coil winding 810 may be set to be less than the number of turns of the second coil winding 820, and the number of turns of the third coil winding 830 may be set to be less than the number of turns of the fourth coil winding 840.

In order to further achieve the coordinated work of the coil winding 800 of the inner ring heating zone and the outer ring heating zone, the inductance and resistance can be further limited, L1<L4, R1>R4; L3<L2, R3>R2. The first coil winding 810 (outer ring heating zone) can be matched with the fourth coil winding 840 (inner ring heating zone). The third coil winding 830 (inner ring heating zone) can be matched with the second coil winding 820 (outer ring heating zone). In this way, the coil winding 800 on the coil can be configured and used arbitrarily, which can meet the requirements of full energy saving of the coil and extension of the service life of the IGBT.

It is worth noting that the above description only uses two sets of coil windings 800 in the inner ring heating zone and the outer ring heating zone to describe the distance. It is understandable that the above solution can be expanded to provide multiple sets of coil windings 800 in each heating zone, or it can be expanded to provide more heating zones. Anything that belongs to the above promotion belongs to the inventive concept of the present disclosure.

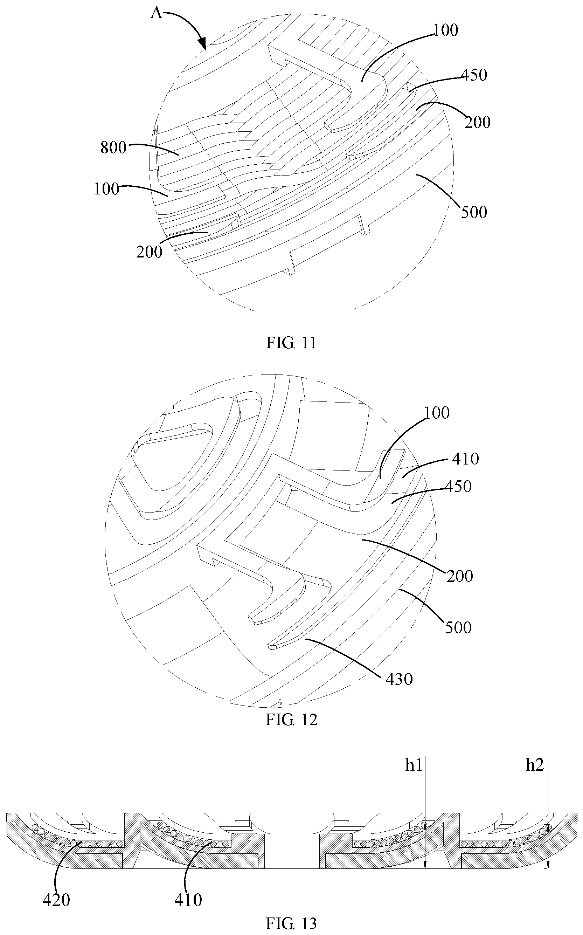

In some embodiments, as shown in FIG 13, in order to make the coil disk suitable for the existing work platform, the coil winding 800 of different situations is set without increasing the total height of the coil disk, the height h1 of the coil winding 800 located in the inner clamping gap 410 is equivalent to the height h2 of the coil winding 800 located in the outer clamping gap 420. When two layers of coil windings 800 are provided in the outer ring heating zone, the height of the two layers of coil windings 800 (overlapped up and down) is equivalent to the height of the coil winding 800 of the single-layer inner ring heating zone. Conversely, when two layers of coil windings 800 are provided in the inner ring heating zone, the height of the two layers of coil windings 800 (overlapped up and down) is equivalent to the height of the coil winding 800 of the single-layer outer ring heating zone. Since the coil winding 800 is arranged obliquely, the height of a single layer can be equal to that of a double layer by adjusting the inclination angle of the coil winding 800. In this embodiment, the height h1 of the coil winding 800 in the inner clamping gap 410 is equivalent to the height h2 of the coil winding 800 in the outer clamping gap 420, such that the coil disk makes full and reasonable use of the space, avoiding the additional height of the coil disk, so that the coil disk can be applied to the existing work platform, and the manufacturing cost of cooking utensils is greatly reduced.

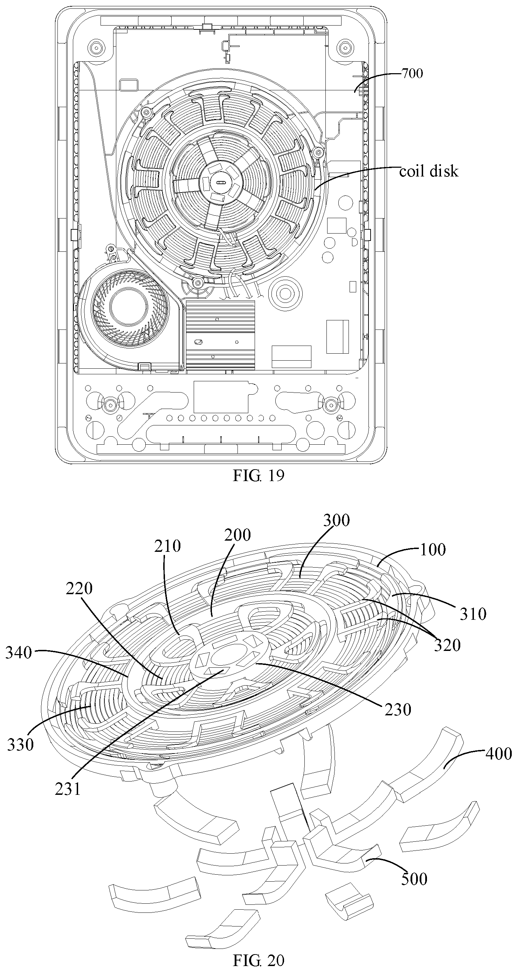

As shown in FIG 19, the present disclosure further provides a cooking utensil. The cooking utensil includes a base 700 and a coil disk. The specific structure of the coil disk refers to the above-mentioned embodiment. Since this cooking utensil adopts all the technical solutions of all the above-mentioned embodiments, it has at least all the beneficial effects brought by the technical solutions of the above-mentioned embodiments, which will not be repeated here. The coil disk is installed on the base 700.

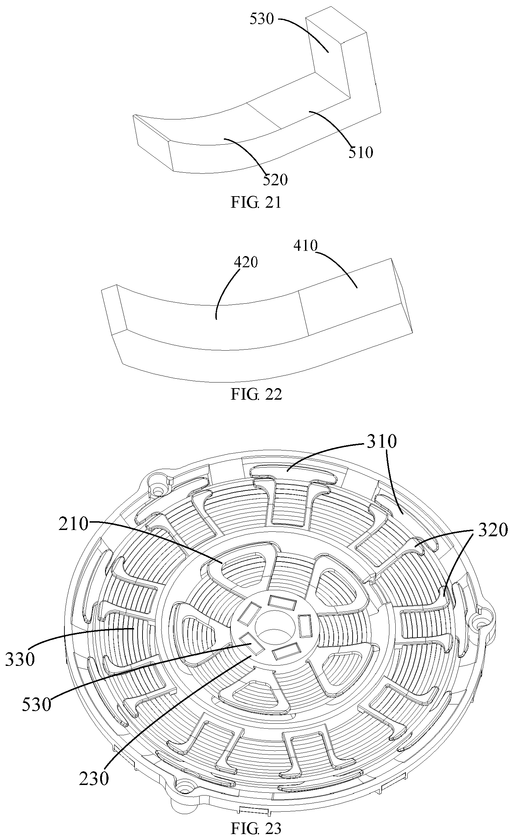

As shown in FIG 20 to FIG 25, in some embodiments of the present disclosure, the coil disk further includes:
a coil support 100, the coil support 100 including an inner heating zone 200 located in a middle of the coil support 100 and an outer heating zone 300 located on an edge of the coil support 100;
an inner magnetic strip 500 corresponding to the inner heating zone 200; and
an outer magnetic strip 400 corresponding to the outer heating zone 300;
an area of the outer magnetic strip 400 covering the outer heating zone 300 being larger than an area of the inner magnetic strip 500 covering the inner heating zone 200.

In this embodiment, the overall shape of the coil support 100 can be many, such as triangle, quadrilateral and other polygons, ellipse, circle, etc., in this embodiment, a circular configuration is taken as an example. The inner heating zone 200 can have many shapes, such as a triangle, a quadrilateral, a circle, a circular ring, etc., and a circular configuration is taken as an example. The outer heating zone 300 has an annular shape and is sleeved outside the inner heating zone 200. The inner heating zone 200 mainly affects the heating efficiency of the middle part of the coil disk, and the outer heating zone 300 mainly affects the heating efficiency of the peripheral area of the coil disk.

The inner magnetic strip 500 can have many shapes, such as a long strip, a circle, a sector, and so on. There are a plurality of inner magnetic strips 500. One end of the plurality of inner magnetic strips 500 extends toward the middle of the inner heating zone 200, and the other end is radiatedly around the inner heating zone 200. Similarly, the outer magnetic strip 400 can also have many shapes, such as a long strip, a circle, a sector, and so on. There are a plurality of outer magnetic strips 400. One end of the plurality of outer magnetic strips 400 extends at the junction of the outer heating zone 300 and the inner heating zone 200, and the other end is radiatedly around the outer heat exchange heating zone.

There are many ways to realize that the area of the outer magnetic strip 400 covering the outer heating zone 300 is larger than the area of the inner magnetic strip 500 covering the inner heating zone 200. When the coverage area of a single outer magnetic strip 400 is equivalent to that of a single inner magnetic strip 500, the number of outer magnetic strips 400 is increased, and the arrangement density of the outer magnetic strips 400 in the outer heating zone 300 is increased, so as to achieve the purpose of increasing the total coverage area. When the number of outer magnetic strips 400 is equal to the number of inner magnetic strips 500, the area of a single outer magnetic strip 400 is increased to increase the total area covered by the outer magnetic strip 400, so as to achieve the purpose of enhancing the magnetic field strength of the outer heating zone 300. When the number of the outer magnetic strips 400 is greater than the number of the inner magnetic strips 500, the outer magnetic strips 400 and the inner magnetic strips 500 are independent of each other. In this way, only the number of magnetic strips needs to be adjusted, and the purpose of increasing the magnetic field strength can be simply achieved.

It is worth noting that in some embodiments, the inner magnetic strip 500 and the outer magnetic stripe 400 may be integrally formed. At this time, the width of the magnetic strip gradually increases along the direction from the inner heating zone 200 to the outer heating zone 300, so that the magnetic field length of a single magnetic strip gradually increases along the length of the magnetic strip.

In addition, regarding the number of heating zones on the coil plate, the number of heating zones can be many, not only including the inner heating zone 200 and the outer heating zone 300, such as three, four, etc.. In this embodiment, only two heating zones are taken as an example for description.

In this embodiment, the area of the outer magnetic stripe 400 covering the outer heating zone 300 is larger than the area of the inner magnetic stripe 500 covering the inner heating zone 200. Through the increase of the magnetic field intensity of the outer coil winding 330 of the outer heating zone 300, the difference in magnetic field intensity between the positions of the outer coil winding 330 and the inner coil winding 220 is greatly reduced. The intensity of the magnetic field in the middle and the periphery of the coil disk is equal, so that the heating efficiency of the coil disk on the middle and the circumference of the pot is equal, so that the pot can be uniformly heated. At the same time, by increasing the magnetic field strength of the outer coil, the utilization rate of the outer coil is greatly increased, which is beneficial to improve the working efficiency of the coil disk.

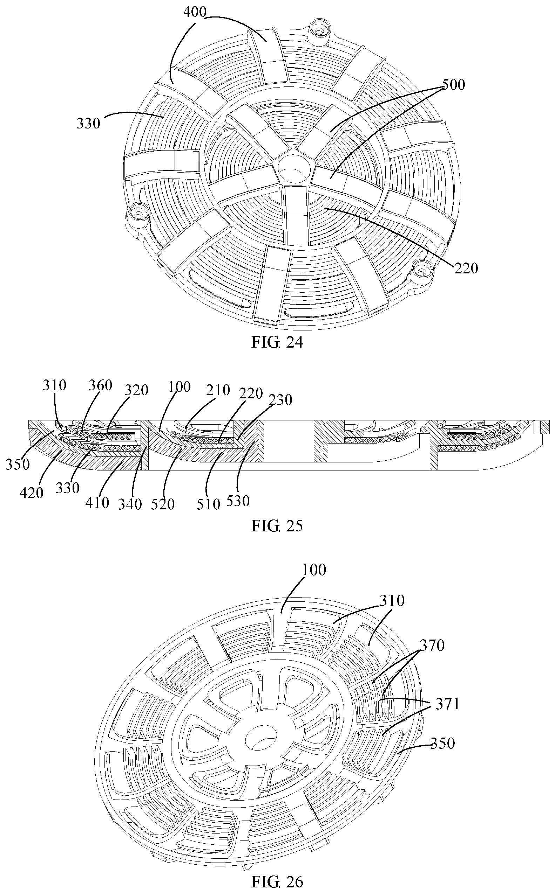

As shown in FIG 25 to FIG 24, the structure and positional relationship of the coil windings and the magnetic strips in the inner heating zone 200 and the outer heating zone 300 are respectively explained below.

In order to further improve the heating efficiency of the inner heating zone 200, an inner coil winding 220 is wound in the inner heating zone 200. The inner coil winding 220 has an inner plane heating winding 221 located in the middle of the inner heating zone 200, and an inner inclined heating winding 222 located at the edge of the inner heating zone 200 and inclined upward. The inner magnetic strip 500 includes an inner plane section 510 corresponding to the inner plane heating winding 221 and an inner inclined section 520 corresponding to the inner inclined heating winding 222.

In this embodiment, a middle of the inner coil winding 220 is horizontal, and the surrounding extends obliquely upward from the horizontal portion. That is, the center of the inner coil winding 220 is in a plane (inner plane heating winding 221), and the edge of the inner coil winding 220 is in an inclined plane upward from the plane portion (inner inclined heating winding 222). Inclination refers to the extension trend, so there are many specific implementation methods, such as plane inclination, curved surface inclination, wave surface inclination, and so on. The coil density of the inclined portion is greater than the coil density of the plane portion in the radial direction of the inner coil winding 220. The inner magnetic strip 500 is provided on the inner inclined section 520 corresponding to the inner inclined heating winding 222, such that the inner inclined section 520 compensates for the magnetic field strength of the inner inclined heating winding 222, so that the magnetic field strength of the area where the inner inclined heating winding 222 and the inner plane heating winding 221 are located are equal, thereby facilitating uniform heating. In addition, through the arrangement of the inner inclined heating winding 222, while increasing the heating efficiency of the edge of the inner heating zone 200, the inner inclined heating winding 222 is closer to the pot, which is beneficial to heating the pot.

In addition, in order to improve the heating uniformity of the inner heating zone 200 of the coil disk, the width of the inner magnetic strip 500 gradually increases from the middle to the edge of the inner heating zone 200. As the width of the inner magnetic strip 500 increases, the intensity of the magnetic field also increases with the extension direction of the magnetic strip, thereby compensating the inner coil winding 220 whose area is gradually increasing, and greatly reducing the distance difference between two adjacent inner magnetic strips 500, so that the heating efficiency in the middle and the periphery of the inner heating zone 200 is equivalent.

In some embodiments, in order to further improve the heating efficiency in the middle of the coil disk, the inner inclined heating winding 222 is arc-shaped, and the inner inclined section 520 is arc-shaped corresponding to the inner inclined heating winding 222, such that the distance between the inner inclined section 520 and the inner inclined heating winding 222 is equivalent to the distance between the inner plane section 510 and the inner plane heating winding 221.

In this embodiment, the concave arc shape of the inner inclined heating winding 222 does not affect the operation of the inner plane heating winding 221, and the number of coil windings is increased within a limited height, thereby increasing the working efficiency of the inner inclined heating winding 222 in a limited height space. The inner inclined section 520 extends in an arc shape along the inner inclined heating winding 222, the inner inclined section 520 not only provides sufficient magnetic field strength for the inner inclined heating winding 222, but also maintains a distance equivalent to the inner plane section 510 to the inner plane heating winding 221. The heating effect of the inner inclined heating winding 222 and the inner plane heating winding 221 are equivalent, which is beneficial to uniform heating.

In another embodiments, in order to improve the heating efficiency at the middle position of the inner heating zone 200, the inner magnetic strip 500 further includes a protruding section 530. The protruding section 530 is connected to an end of the inner plane section 510 away from the inner inclined section 520, and the protruding section 530 is perpendicular to the inner plane section 510. The protruding section 530 is along the height direction of the coil disk, and is centrally provided at the middle position of the inner heating zone 200. The intensity of the magnetic field in the middle of the inner heating zone 200 is greatly increased, so that the heating efficiency in the middle of the inner heating zone 200 is beneficially improved. It is beneficial to improve the heating efficiency in a limited space, fully and reasonably utilize the space, and improve the compactness of the structure.

It is worth noting that the inner support structure 230 can have many shapes, and the overall shape is columnar as an example. In some embodiments, in order to improve the installation stability of the protruding section 530 and to make reasonable use of space, a mounting hole 231 is defined at the bottom of the inner support structure 230 for the protruding section 530 of the inner magnetic strip 500 to be installed. The protruding section 530 extends vertically upward from the mounting hole 231 and is inserted into the inner support structure 230, and the mounting hole 231 penetrates the inner support structure 230 along the height direction of the inner support structure 230.

In order to improve the installation stability and convenience of the inner coil winding 220, an inner support structure 230 is provided in the middle of the inner heating zone 200, and a first inner clamping rib 210 is provided on the inner support structure 230. A first inner winding gap 240 is formed between the first inner clamping rib 210 and the coil support 100, and the inner coil winding 220 is disposed in the first inner winding gap 240. The first inner clamping rib 210 can have many shapes, taking a straight section and an arc section as an example. The first inner winding gap 240 may also have a straight section and an arc section, so as to correspond to the inner plane heating winding 221 and the inner inclined heating winding 222 of the inner coil winding 220.

One end of the first inner clamping rib 210 is fixedly connected to the inner support structure 230, and the other end extends from the inner support structure 230 to the edge of the inner heating zone 200. The first inner clamping rib 210, the inner support structure 230 and the coil support 100 are enclosed to form a first inner winding gap 240. The plurality of first inner clamping ribs 210 are in a ring shape along the support structure, so that the first inner winding gaps are in a ring shape, which facilitates the winding of the inner coil winding 220. The shape of the inner coil winding 220 can be realized by adjusting the arrangement of the first inner clamping rib 210. During the winding process of the inner coil winding 220, only the enameled wire needs to be clamped in the first inner winding gap 240. The enameled wire can be wound in the first inner winding gap 240 simply and reliably. The windings in the first inner winding gap 240 are densely wound as an example.

In order to improve the heating efficiency of the inner heating zone 200, make full and reasonable use of space, and reduce the area of the coil disk, the coil disk also includes a second inner clamping rib. One end of the second inner clamping rib is connected to the inner support structure 230 and is located above the first inner clamping rib 210. A second inner winding gap (not shown) is formed between the second inner clamping rib and the first inner clamping rib 210, and the inner coil winding 220 is disposed in the second inner winding gap (not shown).

In this embodiment, the shape of the second inner clamping rib is similar to the shape of the first inner clamping rib 210, and also has a straight section and an arc section. The second inner clamping rib corresponds to the first inner clamping rib 210, so that a second inner limiting gap having a straight section and an arc-shaped section is formed between the second inner clamping rib and the first inner clamping rib 210. In order to improve the stability of the coil winding in the second inner limit gap, the width of the first inner clamping rib 210 is greater than the width of the second inner clamping rib. The length of the first inner clamping rib 210 is greater than the length of the second inner clamping rib. The plurality of second inner clamping ribs are arranged along the circumferential direction of the inner support structure 230 and corresponding to the first inner clamping ribs 210, so that the second inner limiting gaps are in a circular ring along the circumferential direction of the inner support structure 230. During the winding process of the inner coil winding 220, only the enameled wire needs to be clamped in the first inner winding gap 240 and the second winding gap. The enameled wire can be simply and reliably wound in the first inner winding gap 240 and the second winding gap. The windings in the second inner winding gap (not shown) are densely wound as an example. Through the arrangement of the second inner clamping rib, a double-layer coil structure is formed in the middle of the coil winding (the upper and lower layers are densely wound), which is beneficial to greatly improve the heating efficiency of the inner heating zone 200.

In order to improve the heating efficiency of the inner heating zone 200 and make full and reasonable use of the space, while simplifying the processing technology of the coil disk, the coil disk further includes an inner isolation rib. A plurality of the inner isolation ribs are arranged along the length direction of the first inner clamping rib 210, such that a plurality of inner winding grooves along the length direction of the first inner clamping rib 210 are formed on the first inner clamping rib 210.

In this embodiment, the cross-sectional shape of the inner isolation ribs can have various shapes, such as triangles, squares and other polygons. The inner isolation ribs may extend along the width direction of the first inner clamping rib 210, and the inner isolation ribs extend in a concave arc, so that a plurality of inner isolation ribs can be enclosed to form a circular ring. The inner isolation ribs on the same first inner clamping rib 210 are arranged along the length direction of the first inner clamping rib 210. The inner isolation ribs at the same position on the adjacent first inner clamping ribs 210 are arranged along the circumference of the inner support structure 230 to form an inner winding groove extending along the circumference of the inner support structure 230. The number of coils that can be wound in the same inner winding groove can be set according to requirements, such as 1 turn, 2 turns, 3 turns, etc. The formation of the inner coil winding 220 through the inner winding groove takes sparse winding as an example. The connection between the first inner clamping rib 210, the inner isolation rib and the inner support structure 230 may be detachable (through screws, buckles, glue, etc.) connection, or may be integrally formed. Compared with the solution of providing the first inner clamping rib 210 and the second inner clamping rib at the same time, the solution of providing the first inner clamping rib 210 and the inner isolation rib is easier to implement. Through the arrangement of the inner isolation ribs, a double-layer coil structure is formed in the middle of the coil winding (the lower layer is densely wound and the upper layer is sparsely wound), which is beneficial to greatly improve the heating efficiency of the inner heating zone 200.

In order to further improve the heating efficiency of the outer heating zone 300, an outer coil winding 330 is wound in the outer heating zone 300. The outer coil winding 330 has an outer plane heating winding 331 located in the middle of the outer heating zone 300, and an outer inclined heating winding 332 located at the edge and inclined upward. The outer magnetic strip 400 includes an outer plane section 410 corresponding to the outer plane heating winding 331 and an outer inclined section 420 corresponding to the outer inclined heating winding.

In this embodiment, the portion of the outer coil winding 330 close to the outer support structure 340 is horizontal, and the surrounding portion extends obliquely upward from the horizontal portion. That is, the center of the outer coil winding 230 is in a plane (outer plane heating winding 331), and the edge of the outer coil winding 320 is in an inclined plane upward from the plane portion (outer inclined heating winding 332). Inclination refers to the extension trend, so there are many specific implementation methods, such as plane inclination, curved surface inclination, wave surface inclination, and so on. The coil density of the inclined portion is greater than the coil density of the plane portion in the radial direction of the outer coil winding 330. The outer magnetic strip 400 is provided on the outer inclined section 420 corresponding to the outer inclined heating winding 332, such that the outer inclined section 420 compensates for the magnetic field strength of the outer inclined heating winding 332, so that the magnetic field strength of the area where the outer inclined heating winding 332 and the outer plane heating winding 331 are located are equal, thereby facilitating uniform heating. In addition, through the arrangement of the outer inclined heating winding 332, while increasing the heating efficiency of the edge of the outer heating zone3, the outer inclined heating winding 332 is closer to the pot, which is beneficial to heating the pot.

In addition, in order to improve the heating uniformity of the outer heating zone 300 of the coil disk, the width of the outer magnetic strip 400 gradually increases from the middle to the edge of the outer heating zone 300. As the width of the outer magnetic strip 400 increases, the intensity of the magnetic field also increases with the extension direction of the magnetic strip, thereby compensating the outer coil winding 330 whose area is gradually increasing, and greatly reducing the distance difference between two adjacent outer magnetic strips 400, so that the heating efficiency in the middle and the periphery of the outer heating zone 300 is equivalent.

In some embodiments, in order to further improve the heating efficiency of the outer heating zone 300 of the coil disk, the outer inclined heating winding 332 is arc-shaped, and the outer inclined section 420 is arc-shaped corresponding to the outer inclined heating winding 332, such that the distance between the outer inclined section 420 and the outer inclined heating winding 332 is equivalent to the distance between the outer plane section 410 and the outer plane heating winding 331.

In this embodiment, the concave arc shape of the outer inclined heating winding 332 does not affect the operation of the outer plane heating winding 331, and the number of coil windings is increased within a limited height, thereby increasing the working efficiency of the outer inclined heating winding 332 in a limited height space. The outer inclined section 420 extends in an arc shape along the outer inclined heating winding 332, the outer inclined section 420 not only provides sufficient magnetic field strength for the outer inclined heating winding 332, but also maintains a distance equivalent to the outer plane section 410 to the outer plane heating winding 331. The heating effect of the outer inclined heating winding 332 and the outer plane heating winding 331 are equivalent, which is beneficial to uniform heating.

In order to improve the installation stability and convenience of the outer coil winding 330, an outer support structure 340 is provided between the inner heating zone 200 and the outer heating zone 300, and a first outer clamping rib 310 is provided on the outer support structure 340. A first outer winding gap 350 is formed between the first outer clamping rib 310 and the coil support 100, and the outer coil winding 330 is disposed in the first outer winding gap 350. The first outer clamping rib 310 can have many shapes, taking a straight section and an arc section as an example. The first outer winding gap 350 may also have a straight section and an arc section, so as to correspond to the outer plane heating winding 331 and the outer inclined heating winding 332 of the outer coil winding 330.

One end of the first outer clamping rib 310 is fixedly connected to the outer support structure 340, and the other end extends from the outer support structure 340 to the edge of the outer heating zone 300. The first outer clamping rib 310, the outer support structure 340 and the coil support 100 are enclosed to form a first outer winding gap 350. The plurality of first outer clamping ribs 310 are in a ring shape along the support structure, so that the first outer winding gaps are in a ring shape, which facilitates the winding of the outer coil winding 330. The shape of the outer coil winding 330 can be realized by adjusting the arrangement of the first outer clamping rib 310. During the winding process of the outer coil winding 330, only the enameled wire needs to be clamped in the first outer winding gap 350. The enameled wire can be wound in the first outer winding gap 350 simply and reliably. The windings in the first outer winding gap 350 are densely wound as an example.

In order to improve the heating efficiency of the outer heating zone 300, make full and reasonable use of space, and reduce the area of the coil disk, the coil disk also includes a second outer clamping rib 320. One end of the second outer clamping rib 320 is connected to the outer support structure 340 and is located above the first outer clamping rib 310. A second outer winding gap 360 is formed between the second outer clamping rib 320 and the first outer clamping rib 310, and the outer coil winding 330 is disposed in the second outer winding gap 360.

In this embodiment, the shape of the second outer clamping rib 320 is similar to the shape of the first outer clamping rib 310, and also has a straight section and an arc section. The second outer clamping rib 320 corresponds to the first outer clamping rib 310, so that a second outer limiting gap having a straight section and an arc-shaped section is formed between the second outer clamping rib 320 and the first outer clamping rib 310. In order to improve the stability of the coil winding in the second outer limit gap, the width of the first outer clamping rib 310 is greater than the width of the second outer clamping rib 320. The length of the first outer clamping rib 310 is greater than the length of the second outer clamping rib 320. The plurality of second outer clamping ribs 320 are arranged along the circumferential direction of the outer support structure 340 and corresponding to the first outer clamping ribs 310, so that the second outer limiting gaps are in a circular ring along the circumferential direction of the outer support structure 340. During the winding process of the outer coil winding 330, only the enameled wire needs to be clamped in the first outer winding gap 350 and the second winding gap. The enameled wire can be simply and reliably wound in the first outer winding gap 350 and the second winding gap. The windings in the second outer winding gap 360 are densely wound as an example. Through the arrangement of the second outer clamping rib 320, a double-layer coil structure is formed in the middle of the coil winding (the upper and lower layers are densely wound), which is beneficial to greatly improve the heating efficiency of the outer heating zone 300.

In order to improve the heating efficiency of the outer heating zone 300 and make full and reasonable use of the space, while simplifying the processing technology of the coil disk, the coil disk further includes an outer isolation rib 370. A plurality of the outer isolation ribs 370 are arranged along the length direction of the first outer clamping rib 310, such that a plurality of outer winding grooves 371 along the length direction of the first outer clamping rib 310 are formed on the first outer clamping rib 310.

In this embodiment, the cross-sectional shape of the outer isolation ribs 370 can have various shapes, such as triangles, squares and other polygons. The outer isolation ribs 370 may extend along the width direction of the first outer clamping rib 310, and the outer isolation ribs 370 extend in a concave arc, so that a plurality of outer isolation ribs 370 can be enclosed to form a circular ring. The outer isolation ribs 370 on the same first outer clamping rib 310 are arranged along the length direction of the first outer clamping rib 310. The outer isolation ribs 370 at the same position on the adjacent first outer clamping ribs 310 are arranged along the circumference of the outer support structure 340 to form an outer winding groove 371 extending along the circumference of the outer support structure 340. The number of coils that can be wound in the same outer winding groove 371 can be set according to requirements, such as 1 turn, 2 turns, 3 turns, etc. The formation of the outer coil winding 330 through the outer winding groove 371 takes sparse winding as an example. The connection between the first outer clamping rib 310, the outer isolation rib 370 and the outer support structure 340 may be detachable (through screws, buckles, glue, etc.) connection, or may be integrally formed. Compared with the solution of providing the first outer clamping rib 310 and the second outer clamping rib 320 at the same time, the solution of providing the first outer clamping rib 310 and the outer isolation rib 370 is easier to implement. Through the arrangement of the outer isolation ribs 370, a double-layer coil structure is formed in the middle of the coil winding (the lower layer is densely wound and the upper layer is sparsely wound), which is beneficial to greatly improve the heating efficiency of the outer heating zone 300.

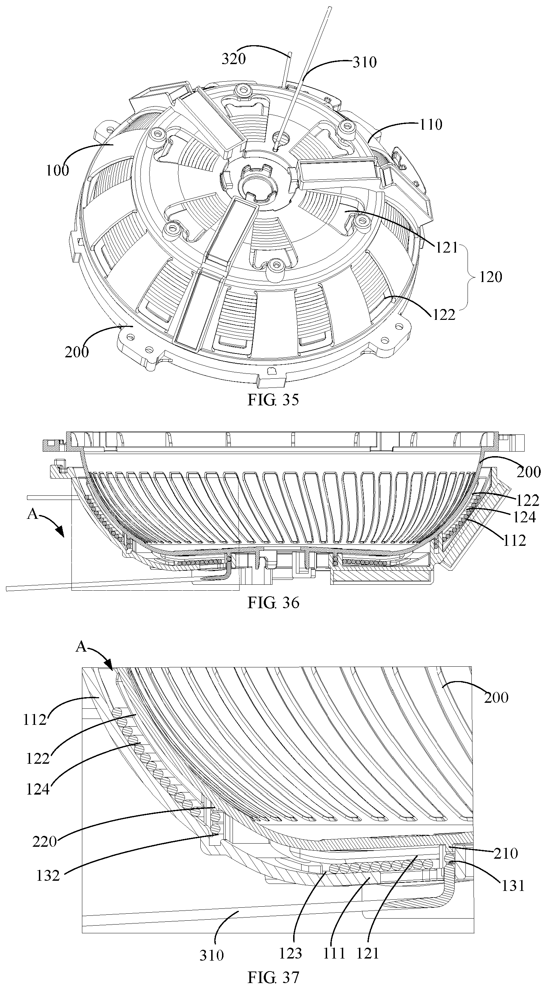

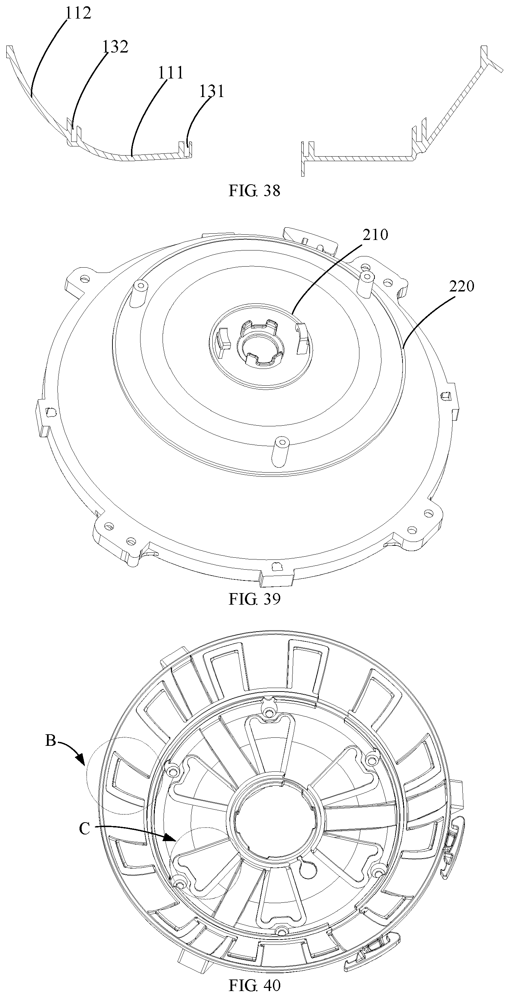

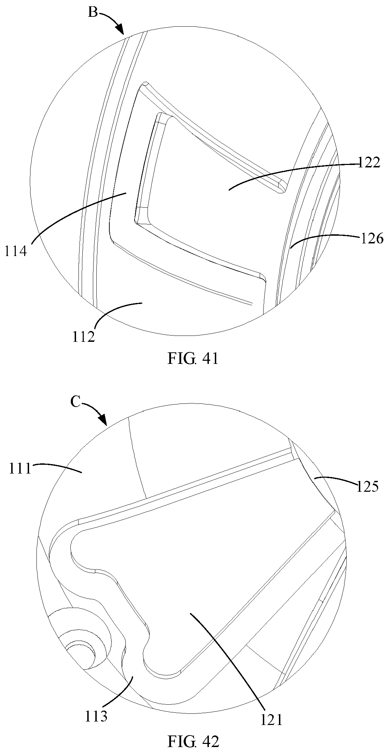

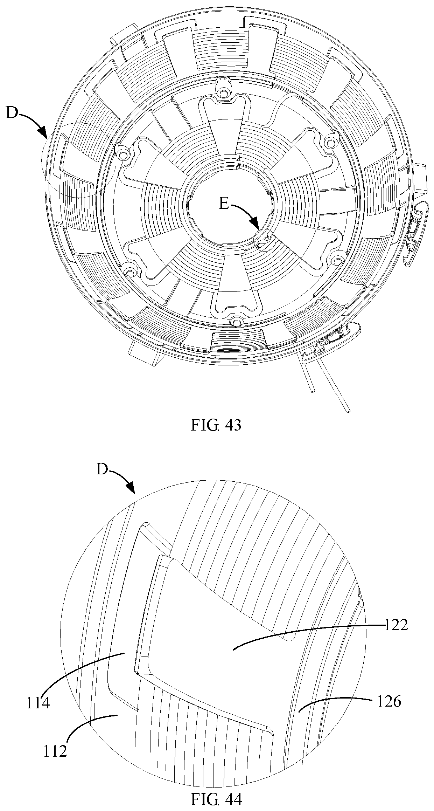

As shown in FIG 35 to FIG 45, in an embodiment of the present disclosure, the coil disk includes:
a base plate 110, wherein the base plate has a winding area; and
a limit piece 120 provided on the base plate 110, wherein a winding gap for coil installation is formed between the limit piece 120 and an inner or outer side wall of the winding area.

In this embodiment, the base plate 110 can have various shapes, such as a flat plate shape, an arc-shaped plate shape, or a three-dimensional structure composed of multiple parts such as a bottom and a side wall. In this embodiment, taking the base plate including the bottom and the sidewalls extending upward from the bottom as an example, the winding area can be provided on any desired area on the base plate 110, such as the bottom and the side walls. The winding area is the area where heat is generated by the pot and the like when the coil base is working, and the coil is wound in the winding area.

The limit piece 120 can have many shapes, and different shapes of the limit piece 120 can be selected according to different shapes of the base plate 110, and the shape of the limit piece 120 can also be set according to the requirements of different working conditions. In this embodiment, the long strip is taken as an example. One end of the limit piece 120 is connected to the base plate 110, and the other end of the limit piece 120 extends along the extending direction of the base plate 110. The limit piece 120 is made of insulating material, such as hard plastic. There are many ways to connect the limit piece 120 and the base plate 110, such as screw connection, snap connection, glue, etc.. In some embodiments, the limit piece 120 and the base plate 110 may also be integrally formed.

The limit piece 120 can be provided on the inner side of the base plate 110 or on the outer side of the base plate 110. When the limit piece 120 is provided on the inner side of the base plate 110, a winding gap is formed between the limit piece 120 and the inner side wall of the base plate 110. When the limit piece 120 is provided on the outer side of the base plate 110, a winding gap is formed between the limit piece 120 and the outer side wall of the base plate 110. When the coil is wound into the winding gap, the coil is clamped by the limit piece 120 and the side wall of the base plate 110, so that the coil is fixed.

In this embodiment, the limit piece 120 is provided on the base plate 110 to form a winding gap between the limit piece 120 and the inner or outer side wall of the base plate 110, and the coil is wound in the winding gap, such that the coil is clamped by the side wall of the base plate 110 and the limit piece 120, so as to realize the fixation of the coil. Compared with the existing fixing method, the fixing of the coil does not require the use of glue, so that no peculiar smell will be generated when the coil is heated, which is beneficial to the user's use. In addition, the efficiency of winding and fixing the coil in this way is greatly increased, and the stability of the coil after winding is greatly increased.

In order to further improve the stability of installing the coil, there are a plurality of limit pieces 120, the plurality of the limit pieces 120 are spaced apart from each other along the circumferential direction of the base plate 110. By arranging a plurality of limit pieces 120 along the circumferential direction of the base plate 110, a plurality of limit gaps are distributed along the circumferential direction of the base plate 110. The coil is clamped by the limit piece 120 and the base plate 110 at multiple positions in the extending direction, so that the installation of the coil is more stable and reliable.

It is worth noting that in some embodiments, the arrangement shape of the limit piece 120 is the winding shape of the coil. The shape of the coil can be realized by setting the arrangement shape of the limit piece 120 (the first loop of the coil is located at the connection between the limit piece 120 and the base plate 110, and the coil is wound on this basis). In this way, during the process of manufacturing the coil disk, it is more conducive to convenient and reliable control of the shape of the coil.

The following takes a specific structure of the base plate 110 as an example to describe the structure of the coil disk in detail. The base plate 110 has a receiving cavity, and the winding area includes a bottom winding area located at the bottom of the base plate and a peripheral winding area located on the side wall 112 of the base plate. In this embodiment, the base plate 110 includes a bottom and a peripheral side wall surrounding the periphery of the bottom. The peripheral side wall extends from the peripheral edge of the bottom to one side of the bottom to enclose and form a receiving cavity for the container to be heated (such as a pot) to be installed. In order to heat the container to be heated more uniformly, or to achieve more heating methods, a winding area is provided on both the bottom and the peripheral side wall of the base plate.

In order to improve the stability of installing the coil, the limit piece 120 includes a bottom limit piece 121, and the bottom of the base plate is provided with a support structure 125 extending toward the inside of the base plate. One end of the bottom limit piece 121 is fixedly connected to the support structure 125. The other end of the bottom limit piece 121 extends along the bottom surface 111 of the base plate to form a bottom winding gap 123 between the bottom limit piece 121 and the bottom surface 111 of the base plate.

In this embodiment, the support structure 125 can have many shapes. Taking the columnar shape as an example, any structure that can provide a connection for the bottom limit piece 121 and has a gap between the connection point and the bottom surface 111 of the base plate is acceptable. The support structure 125 is located at the middle of the bottom and extends to the middle of the base plate, and a plurality of bottom limit pieces 121 radiate from the support structure 125 to the surroundings. The connection position of the bottom limit piece 121 and the support structure 125 can be set according to the radial size of the winding. Different connection positions determine the different sizes of the bottom winding gap 123. The larger the radial size of the winding, the larger the bottom winding gap 123, and the smaller the radial size of the winding, the smaller the bottom winding gap 123. The other end of the bottom limit piece 121 extends along the bottom surface 111 so that the bottom winding gap 123 is uniform. When the winding enters the bottom winding gap 123, the winding can be stably clamped no matter where it is. In addition, the support structure 125 and the bottom limit piece 121 are provided inside the base plate, such that the operation of the limit piece 120 is interfered by the external environment as little as possible, so that the stability of the limit piece 120 is improved.

In some embodiments, a bottom heat dissipation opening 113 is defined on the bottom of the base plate corresponding to the position of the bottom limit piece 121. The shape and size of the bottom heat dissipation opening 113 are equivalent to those of the bottom limit piece 121, and the bottom heat dissipation opening 113 is located directly below the bottom limit piece 121. The bottom heat dissipation opening 113 allows the bottom limit piece 121 to dissipate heat very well, which is beneficial to the stable operation of the bottom winding area. Meanwhile, the bottom heat dissipation opening 113 enables the bottom limit piece 121 to grow integrally with the base plate 110, reducing the difficulty of forming the bottom limit piece 121, that is, the bottom heat dissipation opening 113 facilitates the formation of the bottom limit piece 121.

In order to improve the stability of installing the side coil, the limit piece 120 includes a side wall limit piece 122, and the base plate side wall 112 is provided with a rib 126 extending toward the inside of the base plate 110. One end of the side wall limit piece 122 is fixedly connected to the support rib 126. The other end of the side wall limit piece 122 extends from bottom to top along the base plate side wall 112 to form a side wall winding gap 124 between the side wall limit piece 122 and the base plate side wall 112.

In this embodiment, the rib 126 can have many shapes. Take the circular ring shape as an example, any structure that can provide a connection for the side wall limit piece 122 and has a gap between the connection point and the base plate side wall 112 is acceptable. The rib 126 is located at the edge of the bottom and extends upward, and a plurality of side wall limit pieces 122 extend from different positions of the rib 126 along the inner side wall of the base plate 110. The connection position of the side wall limit piece 122 and the rib 126 can be set according to the radial size of the winding. Different connection positions determine the different sizes of the side wall winding gap 124. The larger the radial dimension of the winding is, the larger the side wall winding gap 124 is, and the smaller the radial dimension of the winding is, the smaller the side wall winding gap 124 is. The other end of the side wall limiting piece 122 extends along the inner side wall of the base plate 110, so that the side wall winding gap 124 is uniform. When the winding enters the side wall winding gap 124, no matter where it is, the winding can be stably clamped. In addition, the rib 126 and the side wall limit piece 122 are inside the base plate 110, so that the operation of the limit piece 120 is interfered by the external environment as little as possible, so that the stability of the limit piece 120 is improved.

In some embodiments, a side wall heat dissipation opening 114 is defined on the bottom of the base plate 110 corresponding to the position of the side wall limit piece 122. The shape and size of the side wall heat dissipation opening 114 are equivalent to the shape and size of the side wall limit piece 122, and the side wall heat dissipation opening 114 is located outside the side wall limit piece 122. The side wall heat dissipation opening 114 allows the side wall limit piece 122 to dissipate heat very well, which is beneficial to the stable operation of the side heating zone. At the same time, the side wall heat dissipation opening 114 makes the side wall limit piece 122 integrated with the base plate 110, thus the difficulty of the forming the side wall limit piece 122 is reduced, that is, the side wall heat dissipation opening 114 is beneficial to the formation of the side wall limit piece 122.

It is worth noting that the inner wall of the base plate 110 can have many shapes, taking an arc shape as an example. The inner side wall of the base plate 110 has a concave arc, and the side wall limit piece 122 has a concave arc, so that the side wall winding gap 124 is uniform along the length direction of the side wall limit piece 122. In this embodiment, the shape of the sidewall limit piece 122 is equivalent to the shape of the inner side wall of the base plate, and the curvatures of the two are equivalent, so that the side wall winding gap 124 is very uniform, which is beneficial to the stable installation of the winding.

In some embodiments, in order to further improve the stability of the coil winding, an inner winding groove 131 is formed in the middle of the base plate 110. The bottom of the inner winding groove 131 is provided with an inner lead 310 hole for the inner lead 310 to pass through, so that the inner lead 310 is pressed tightly by the winding in the inner winding groove 131; and/or, an outer winding groove 132 is formed on the edge of the base plate 110 for installation of the outer lead 320 after the winding is completed.

In this embodiment, there are many ways to form the inner winding groove 131, the inner winding groove 131 can be directly defined on the base plate 110, or formed by arranging components on the base plate 110, for example, by arranging a plurality of limit ribs 126 to surround it. The length of the inner winding groove 131 can be set as required, such as 1/4 circle, 1/2 circle, complete circle, etc. It is worth noting that the inner lead 310 is a wire drawn from the wire inlet end of the winding, and the outer lead 320 is a wire drawn from the wire outlet end of the winding. The inner lead 310 first passes through the inner winding groove 131 through the inner lead 310 hole to pass through the inner winding groove 131. The winding is then wound in the inner winding groove 131, and the winding (the winding includes at least the first winding coil) in the inner winding groove 131 is pressed above the inner lead 310. The end of the inner lead 310 can be very stably fixed, thereby avoiding the dimensional error caused by the displacement of the winding in the extension direction, which is beneficial to improve the accuracy of the winding coil. It is worth noting that there is a distance between the inner winding groove 131 and the bottom winding gap 123, and the inner winding groove 131 and the bottom winding gap 123 are connected by a transition section 330 of the wire. It can not only ensure the accuracy of the position and quantity of the winding coils, but also set the position of the inner winding groove 131 according to requirements, which is beneficial to improve the rationality of the structural layout of the coil disk base 100, and is beneficial to improve the stability of the coil disk base 100 in use.

Similarly, the outer winding groove 132 can also be formed in multiple ways like the inner winding groove 131, and its length can also be a 1/4 circle, a 1/2 circle, or complete circle. The outer winding groove 132 is provided on the edge of the base plate 110 to fix the winding after winding. In some embodiments, in order to further facilitate the fixing of the outer lead 320, the outer winding groove 132 is formed at a higher position than the inner winding groove 131, so that the outer winding groove 132 is closer to the position where the winding is to be completed. When the winding is about to end, the winding extends along the outer winding groove 132, and at least the last coil is provided in the outer winding groove 132. After the winding is completed, the outer lead 320 extends from the outer winding groove 132.

The coil disk usually also includes a disk base 200 matched with the coil disk group, and the disk base 200 is fixedly connected to the coil disk group. When the base plate 110 has a receiving cavity, the disk base 200 is installed in the receiving cavity, and the magnetic strip is corresponding to the winding coil. Specifically, the bottom of the disk base 200 is provided with an inner limit rib 210, and the inner limit rib 210 is installed in the inner winding groove 131 of the base plate 110 on the side away from the disk base 200. The bottom of the disk base 200 is provided with an outer limit rib 220, and the side of the outer limit rib 220 away from the disk base 200 is installed in the outer winding groove 132 of the base plate 110. On the side of the disk base 200 facing the base plate 110, an inner limit rib 210 is provided corresponding to the inner winding groove 131, and an outer limit rib 220 is provided corresponding to the outer winding groove 132. When the winding is over, the inner limit rib 210 is installed in the inner winding groove 131 to suppress and limit the inner lead 310, so as to achieve the purpose of further limiting the inner lead 310 (limiting the vertical direction and increasing the pressing strength); and the outer limit rib 220 is installed in the outer winding groove 132 to suppress and limit the outer lead 320, so as to achieve the purpose of further limiting the outer lead 320 (limiting in the vertical direction and increasing the pressing strength).

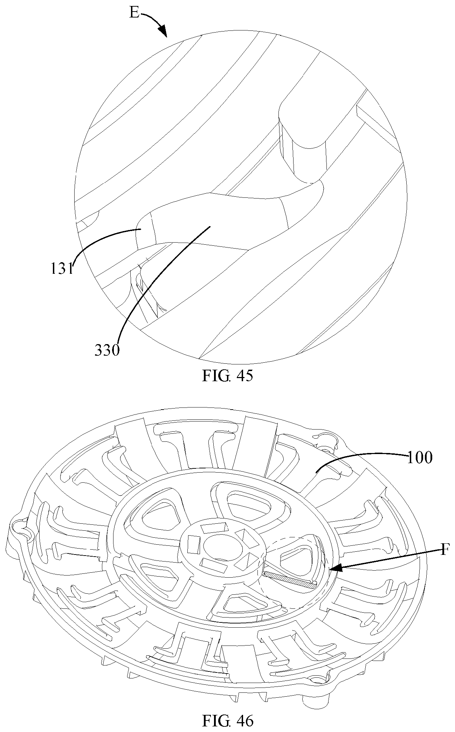

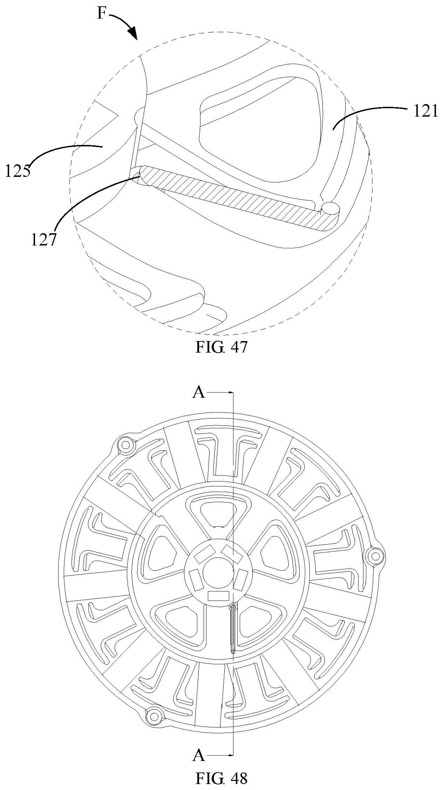

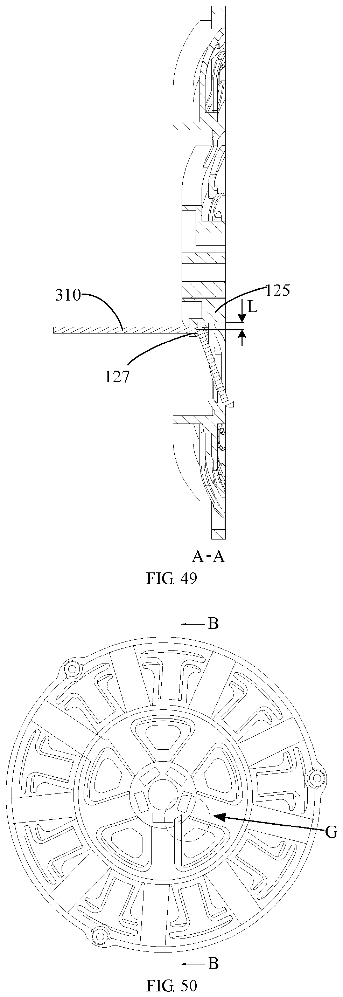

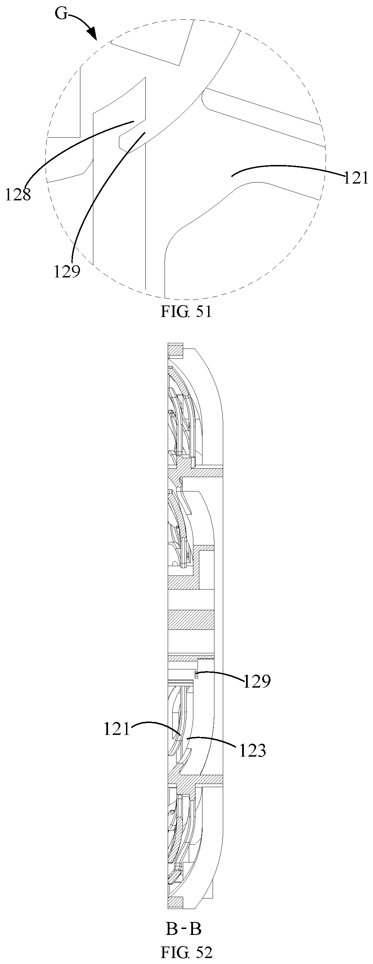

It is understandable that in other embodiments, as shown in FIG 46 to FIG. 52, there are many ways to fix the inner lead 310 and the outer lead 320 to further fix the inner lead 310. Here are two examples for illustration:
The bottom of the base plate 110 is provided with a positioning hole 127 penetrating the base plate 110 for the inner lead 310 to pass through and be fastened before winding. The aperture of the positioning hole 127 is 2 mm to 10 mm. The distance L between the center of the positioning hole 127 and the bottom winding gap 123 (the bottom limit gap 123 and the position close to the support structure 125) is 0 to 6 mm. The positioning hole 127 is located inside the bottom winding gap 123. The upper surface of the positioning hole 127 is flat or slightly lower than the surface of the base plate 110 near the bottom winding gap 123, with a distance ranging from 0 to 6mm (which facilitates the inner lead 310 to enter and pass through the positioning hole 127). The bottom surface of the positioning hole 127 does not exceed the bottom surface of the base plate 110, which facilitates the inner lead 310 to pass through the positioning hole.

The bottom of the base plate 110 is provided with a buckle groove 128 for the inner lead 310 to be installed and fastened before winding. Specifically, a buckle groove 128 is provided inside the bottom winding gap 123. The opening of the buckle groove 128 is in a clockwise direction, and a groove retaining rib 129 is in a counterclockwise direction. The upper surface of the groove retaining rib 129 and the surface of the base plate 110 near the bottom winding gap 123 are flat or slightly lower than 0 to 6 mm (facilitating the inner lead 310 to enter and pass through the buckle groove 128). The bottom surface of the groove retaining rib 129 does not exceed the bottom surface of the base plate 110, which is beneficial for the inner lead 310 to extend from the buckle groove 128. The buckle groove 128 is of an open type, and the shape of the buckle groove 128 and the groove retaining rib 129 is not limited to a long strip shape, and may be round, square, or the like.

The present disclosure further provides a coil disk. The coil disk includes a disk base and a coil disk base. The specific structure of the coil base refers to the above-mentioned embodiment. Since the coil disk adopts all the technical solutions of all the above-mentioned embodiments, it has at least all the beneficial effects brought by the technical solutions of the above-mentioned embodiments, which will not be repeated here. The disk base is connected to the coil disk base.

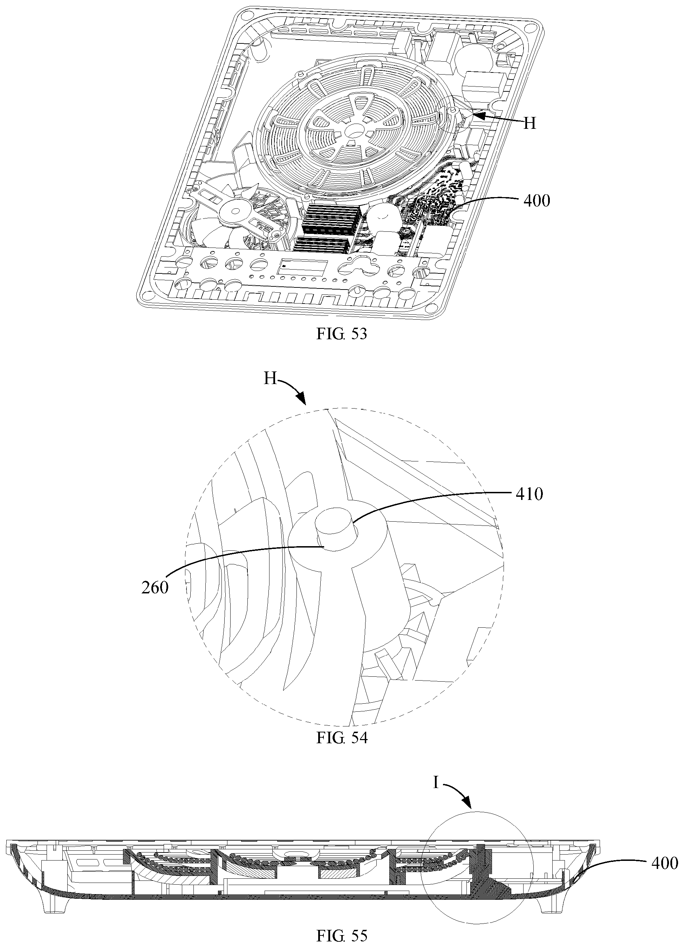

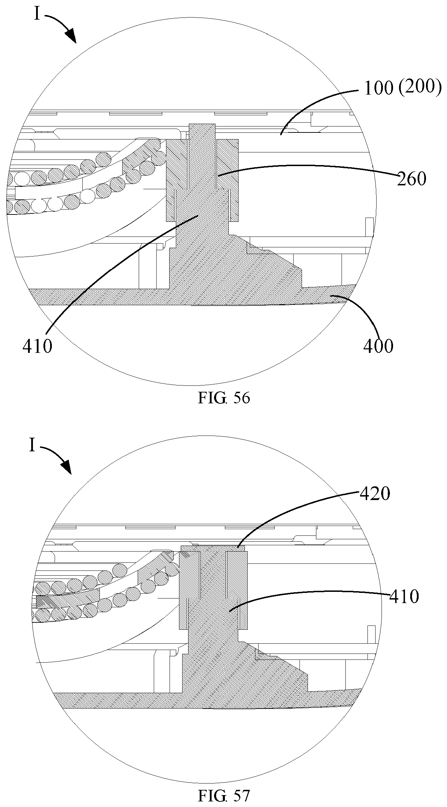

The present disclosure further provides a cooking utensil. As shown in FIG 53 to FIG 57, the cooking utensil includes a coil disk and a coil disk holder 100. The specific structure of the cooking utensil refers to the above-mentioned embodiment. Since the cooking utensil adopts all the technical solutions of all the above embodiments, it has at least all the beneficial effects brought about by the technical solutions of the above embodiments, which will not be repeated here. It is worth noting that the cooking utensil can be a cooking device that use coil electromagnetic heating, such as an electric rice cooker, an induction cooker, an electric oven, a microwave oven, and an electric oven.

In some embodiments, in order to improve the convenience of connecting the base 400 and the coil disk, the cooking utensil includes a base 400, and a positioning column 410 is provided on the base 400; the coil disk holder 100 or the disk base 200 is provided with a positioning hole 260 corresponding to the positioning column 410; and the cooking utensil further includes a fastener 420, and the fastener 420 is fixedly connected to the positioning column 410 passing through the positioning hole 260.

In this embodiment, the positioning column 410 is vertically upward. The cross-section of the positioning column 410 can have many shapes, such as a circle, an ellipse, and a polygon. Take the shape of a circle as an example. Taking the positioning hole 260 defined on the coil disk holder 100 as an example. When the coil disk holder 100 is installed on the base 400, the positioning hole 260 is sleeved on the positioning column 410. The fastener 420 is fixedly connected to the positioning column 410 to prevent the positioning column 410 from falling off the positioning hole 260. In this way, the assembly process between the coil disk holder 100 and the base 400 is greatly simplified, which is beneficial to improve the assembly efficiency of the coil disk holder 100.

In order to better position the coil base holder 100, the positioning column 410 is a stepped column. The positioning hole 260 is a stepped hole. The step of the positioning column 410 abuts the step of the positioning hole 260 to limit the distance between the base 400 and the coil base holder 100 or the disk base 200. The large diameter end of the stepped shaft is located at the lower, and the small diameter end is located at the upper; the large diameter end of the stepped hole is located at the lower and the small diameter end is located at the upper. The top of the large-diameter end of the stepped shaft abuts against the top of the large-diameter end of the stepped hole to support the coil disk holder 100, so that the distance between the base 400 and the coil disk holder 100 can be realized by the specific size.

There may be many ways to connect the fastener 420 to the positioning column, such as a snap connection, a direct snap connection, or an adhesive connection. In some embodiments, in order to further improve the connection efficiency, the positioning column 410 is extended out of the positioning hole 260, and then under the action of pressure and/or high temperature, the protruding positioning post 410 is deformed, so that the size of the deformed portion is larger than the aperture of the positioning hole 260, so as to realize the fixation of the positioning column 410 and the positioning hole 260. Specifically, the fastener 420 is deformed from the part of the positioning column 410 extending out of the positioning hole 260 through extrusion and/or melting. In this embodiment, the hot pressing process is taken as an example, that is, heating and pressurizing the protruding portion of the positioning column 410 simultaneously. In this way, the connection process of the coil disk holder 100 and the base 400 is further greatly simplified, which is beneficial to further improve the assembling efficiency of cooking utensil.

The present disclosure provides a coil disk, which has an irregularly shaped heating zone, so that the heating effect can be more uniform.

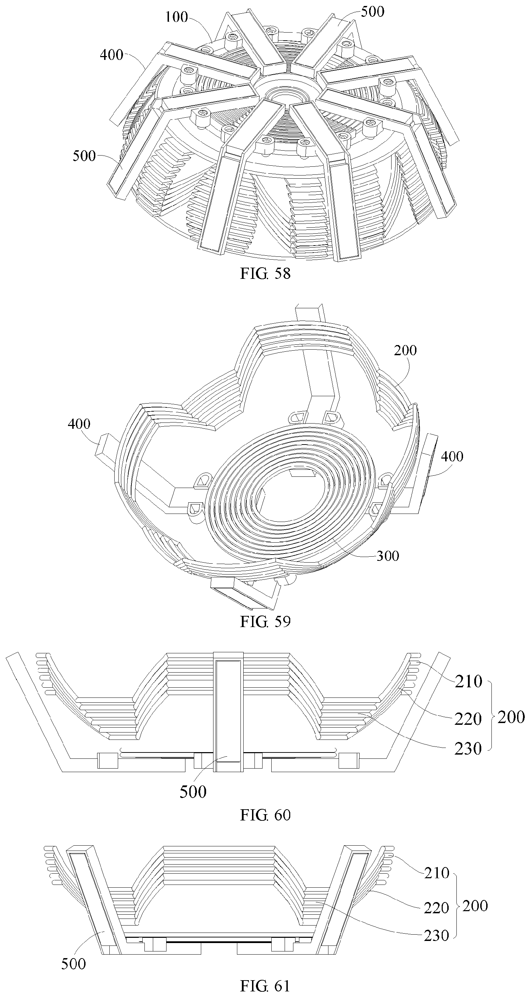

In an embodiment of the present disclosure, as shown in FIG 58 and FIG 59, the coil disk includes a disk base 100 and a first coil winding 200. The peripheral side wall of the disk base 100 is provided with a first winding groove. The first coil winding 200 is wound in the first winding groove along a preset trajectory. The first coil winding 200 has an irregular shape to improve the uniformity of the heating effect of the coil disk.

It should be noted that the irregular shape of the first coil winding 200 includes at least the following two aspects. First, the first coil winding 200 has an irregular shape in the height direction of the peripheral side wall of the disk base. In this way, the first coil winding 200 can form multiple heating zones with height differences, thereby improving the uniformity of the heating effect of the coil disk. Second, the overall shape of the first coil winding 200 is irregular. For example, the first coil winding 200 may be in an oval shape or a polygonal shape, such that the first coil winding 200 can be adapted to an elliptical heating device or a polygonal heating device, thereby the distance between the heating device and the coil winding can be made smaller, so that the heating effect of the heating device can be more uniform.

Specifically, the above two effects will be described in detail in the first and second embodiments below.

In the first embodiment of the present disclosure, the preset trajectory has peaks and valleys. There is a height difference between the peak portion and the valley portion, so that the first coil winding 200 forms a plurality of heating zones with a height difference.

Since the first coil winding 200 of the coil disk of the present disclosure is wound in the first winding groove along a preset trajectory, the preset trajectory has peaks and valleys, and there is a height difference between the peaks and the valleys, so a plurality of heating zones with height differences can be formed, so that the heating zones can be decomposed. That is, the area with the strongest magnetic field has changed from an intermediate position to two heating positions in the peak heating zone and the valley heating zone. The strongest magnetic field in the peak heating zone is concentrated in the middle heating position of the peak heating zone. The strongest magnetic field in the valley heating zone is concentrated in the middle heating position of the valley heating zone. However, there is a height difference between the peak heating zone and the valley heating zone, and the intermediate heating positions of the two have different heights, so the uniformity of the heating effect of the coil disk can be further improved.

Further, as shown in FIG 2 and FIG 3, the structure of the first coil winding 200 will now be described. In this embodiment, the first coil winding 200 includes an upper half-turn winding 210, a transition winding 220, and a lower half-turn winding 230 that are sequentially wound along the height direction of the disk base 100. The upper half-turn winding 210 forms a first heating zone, the transition winding 220 forms a second heating zone, and the lower half-turn winding 230 forms a third heating zone. Since the first heating zone, the second heating zone, and the third heating zone are sequentially distributed in the height direction of the disk base 100, the height of the strongest magnetic field of the first heating zone, the second heating zone and the third heating zone are different. Furthermore, the heights of the high-temperature heating zones of the first heating zone, the second heating zone, and the third heating zone can be made different, so that the uniformity of the heating effect of the coil disk in the height direction of the disk base 100 can be improved.

Further, as shown in FIG. 59 and FIG 60, in order to further improve the uniformity of the heating effect of the coil disk, in an embodiment of the present disclosure, the upper half-turn winding 210, the transition winding 220 and the lower half-turn winding 230 are staggered along the circumferential direction of the disk base 100, thus the uniformity of the heating effect of the first heating zone, the second heating zone, and the third heating zone in the circumferential direction of the disk base 100 can be further improved.

However, the design of this application is not limited to this, in other embodiments, the first coil winding 200 may further include N first half-turn windings sequentially wound along the height direction of the disk base 100, and N is a positive integer greater than or equal to 4. In addition, the first coil winding 200 may also include M second half-turn windings sequentially wound along the circumferential direction of the disk base 100, and M is a positive integer greater than or equal to 2.

Further, as shown in FIG. 59 and FIG 60, the structure of the first coil winding 200 will now be described in detail. In this embodiment, the first coil winding 200 includes a plurality of irregular toroidal coils in nested arrangement. Each of the irregular toroidal coils includes a plurality of groups of upper, transition, and lower sections connected in sequence; the upper sections of a plurality of the irregular toroidal coils constitute the upper half-turn winding 210, the transition sections of a plurality of the irregular toroidal coils constitute the transition winding 220, and the lower sections of the plurality of the irregular toroidal coils constitute the lower half-turn winding 230.

Specifically, in this embodiment, the heads and ends of a plurality of the irregular toroidal coils are connected in sequence, and each irregular toroidal coil can be divided into multiple groups of upper section, transition section and lower section that are connected in sequence.

Further, in order to increase the strength of the magnetic line of induction of the first coil winding 200, in an embodiment of the present disclosure, the disk base 100 further includes a magnetic strip holder 400 on which a magnetic strip 500 is provided; the magnetic strip 500 is corresponding to the upper half-turn winding 210 and/or the lower half-turn winding 230.

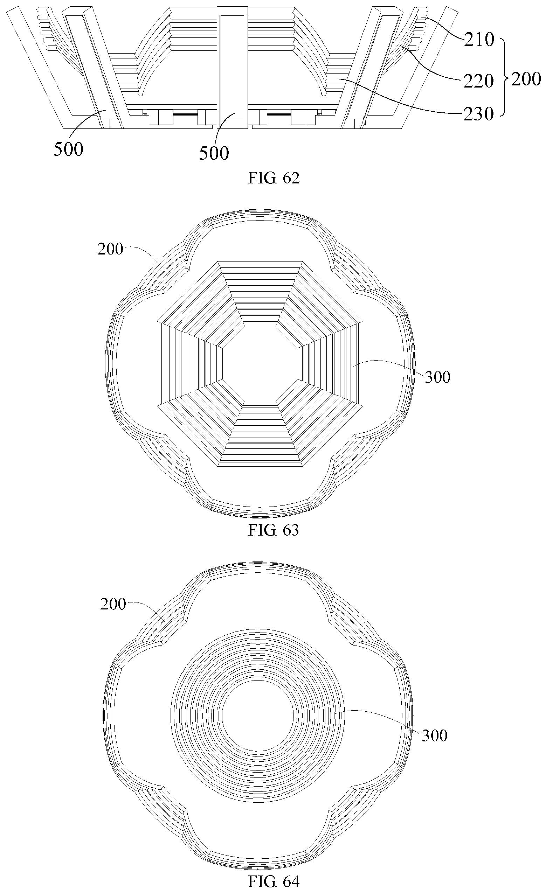

Specifically, as shown in FIG 60, in the first embodiment, the magnetic strip 500 corresponds to the upper half-turn winding 210. As shown in FIG. 61, in the second embodiment, the magnetic strip 500 corresponds to the lower half-turn winding 230. As shown in FIG 62, in the third embodiment, the magnetic strip 500 corresponds to the upper half-turn winding 210 and the lower half-turn winding 230. Since the magnetic strip 500 corresponds to the upper half-turn winding 210 and/or the lower half-turn winding 230, the magnetic strip 500 has the effect of condensing the magnetic induction lines generated by the upper half-turn winding 210 and/or the lower half-turn winding 230. Therefore, the concentration density of the magnetic lines of induction can be increased, so that the heating device per unit area (not shown) can contact more magnetic lines of induction, so that the heating rate of the coil disk can be increased.

However, the design of the present disclosure is not limited to this. In other embodiments, the magnetic strip 500 may also correspond to the transition winding 220.

Further, as shown in FIG 63 and FIG 64, a second winding groove is provided on the bottom wall of the disk base 100, and a second coil winding 300 is wound in the second winding groove. The second coil winding 300 on the bottom and the first coil winding 200 on the side wall can simultaneously heat the bottom and side walls of the heating device. In this way, tumbling heating can be realized, so that the heating effect of the coil disk is more uniform.

In an embodiment of the present disclosure, the second coil winding 300 includes a plurality of sub-coil windings (not shown). In this embodiment, the shapes of the multiple sub-coil windings are configured to fully cover the bottom of the disk base 100. For example, in this embodiment, the bottom of the disk base 100 is circular, and the coil winding includes two semicircular sub-coil windings or four 90° sector-shaped sub-coil windings.

Further, as shown in FIG 64, in an embodiment of the present disclosure, the second coil winding 300 has a concentric circular shape, and the second coil winding 300 is a sparsely wound coil winding, that is, the second coil winding 300 is sparsely wound. Sparse winding and dense winding are two common winding methods for coil windings. The advantages of the dense winding are the close contact between the wires, the strong magnetic field, the large area and the high efficiency. The shortcomings of the dense winding are poor heat dissipation and the enameled wire is prone to short circuit risks. The advantages of the sparse winding are convenient winding, good heat dissipation effect, less risk of short circuit, and easy quality control. The disadvantage of the sparse winding is that the space occupied by the winding is larger than that of the dense winding. On the one hand, the coupling between the windings is reduced, and the leakage inductance will be larger than that of the dense winding; on the other hand, the distributed capacitance between the wires of the sparse winding is larger, and the loss of the high frequency transformer working at a higher frequency will also increase.

In this embodiment, the second coil winding 300 has a concentric circular shape, and the second coil winding 300 is wound by a sparse winding process. In this way, the heat dissipation effect of the second coil winding 300 is good, and the quality is easy to control. However, the design of the present disclosure is not limited to this, in other embodiments, as shown in FIG 63, the second coil winding 300 may also have a polygonal shape, and the second coil winding 300 may be wound by a sparse winding or dense winding process.

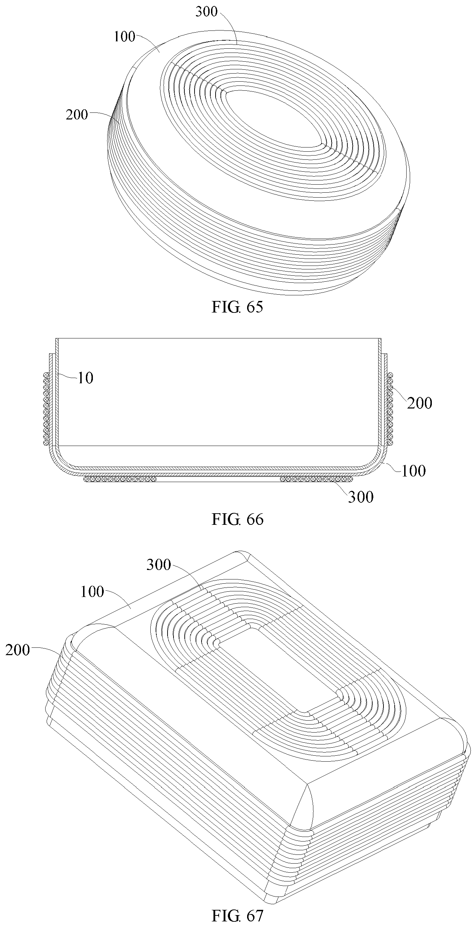

Further, in a second embodiment of the present disclosure, as shown in FIG. 65 to FIG 67, considering that the disk base 100 of the conventional coil disk is mostly in a bowl shape, it can only be applied to a circular heating appliance 10 (such as a pot). In order to make the coil disk adaptable to pots of different shapes, in this embodiment, the first coil winding 200 is in an elliptical shape or a polygonal shape. The first coil winding 200 can be adapted to an elliptical heating device or a polygonal heating device, so that the distance between the heating device and the coil winding can be made smaller, so that the heating effect of the heating device can be more uniform. In this embodiment, the polygon includes quadrangular, hexagonal, octagonal and other shapes.

In an embodiment, the disk base 100 is provided with an accommodating cavity for placing a heating device, the accommodating cavity is configured to fit a shape of the heating device, and the first coil winding 200 is wound on an outer peripheral wall of the accommodating cavity. Specifically, in this embodiment, the accommodating cavity may be in an elliptical or polygonal shape.

The present disclosure further provides a cooking utensil (not shown). The cooking utensil includes the above coil disk. The specific structure of the coil disk refers to the above-mentioned embodiment. Since the cooking utensil in the present disclosure adopts all the technical solutions of all the above-mentioned embodiments, it has at least all the beneficial effects brought by the technical solutions of the above-mentioned embodiments, which will not be repeated here.

It should be noted here that in this embodiment, the cooking utensil is an electric rice cooker. In other embodiments, the cooking utensil can also be an induction cooker, an electric pressure cooker, a cooking machine, an electric stew pot, a wall breaker, and the like.

The above are only some embodiments of the present disclosure, and do not limit the scope of the present disclosure thereto.

## Claims

1. A coil disk, comprising:
a support structure (300) located in a middle of the coil disk;
a first clamping rib (100), a first end of the first clamping rib (100) being connected to the support structure (300), a second end of the first clamping rib (300) extending in a direction away from the support structure (300); and
a second clamping rib (200) located below the first clamping rib (300), a first end of the second clamping rib (200) being connected to the support structure (300), a second end of the second clamping rib (200) extending in a direction away from the support structure (300);
wherein the first clamping rib (100), the second clamping rib (200), and the support structure (300) are enclosed to form a clamping gap (400) for winding an enameled wire;
**characterised in that** the first clamping rib (100) and the second clamping rib (200) are integrally formed with the support structure (300).

2. The coil disk of claim 1, wherein the coil disk includes a plurality of first clamping ribs (100), radially distributed along a circumferential direction of the support structure; and/or
a plurality of second clamping ribs (200) radially distributed along the circumferential direction of the support structure for the clamping gap to be distributed along the circumferential direction of the support structure.

3. The coil disk of claim 1, wherein at least one of a width of the first or second clamping rib (100) gradually increases outward from the support structure (300).

4. The coil disk of claim 1, wherein the first clamping rib (100) and the second clamping rib (200) have straight sections, and a radial cross section of the clamping gap (400) has a straight section accordingly; and/or
the first clamping rib (100) and the second clamping rib (200) have stepped sections, such that a radial cross section of the clamping gap (400) has a stepped section; and/or
the first clamping rib (100) and the second clamping rib (200) have arc-shaped curved sections, such that a radial cross section of the clamping gap has an arc curved section.

5. The coil disk according to any preceding claim, wherein a number of layers of coil windings (800) wound in the clamping gap (400) is 2 to 5.

6. The coil disk of any one of claims 1 to 4, wherein a height of the clamping gap (400) is 2 mm to 20 mm.

7. The coil disk of claim 1, further comprising an inner ring heating zone and an outer ring heating zone; wherein
the clamping gap (400) includes an inner clamping gap (410) located in the inner ring heating zone and an outer clamping gap (420) located in the outer ring heating zone, and the inner clamping gap (410) and the outer clamping gap (420) are upwardly inclined and have different inclination angles.

8. The coil disk of claim 7, wherein the outer clamping gap (420) includes a first winding gap (421) and a second winding gap (422) that are arranged along an up-down direction, and an inclination angle of the first winding gap (421) is different from an inclination angle of the second winding gap (422).

9. The coil disk of claim 7, wherein the support structure (300) comprises an inner support structure (310) located in the inner ring heating zone and an outer support structure (320) located in the outer ring heating zone;
the first clamping rib (100) includes a first inner clamping rib (121) and a first outer clamping rib (122), and the second clamping rib (200) includes a second inner clamping rib (221) and a second outer clamping rib (222);
the first inner clamping rib (221) and the second inner clamping rib (222) are inclined upward from the inner support structure (310) in a direction towards the outer ring heating zone to form the inner clamping gap (410) between the first inner clamping rib (121) and the second inner clamping rib (221);
the first outer clamping rib (122) and the second outer clamping rib (222) are inclined upward from the outer support structure in a direction away from the inner ring heating zone to form the outer clamping gap (420) between the first outer clamping rib (122) and the second outer clamping rib (222).

10. The coil disk of claim 1, wherein the coil disk includes an inner ring heating zone and an outer ring heating zone; the clamping gap (400) includes an inner clamping gap (410) located in the inner ring heating zone and an outer clamping gap (420) located in the outer ring heating zone;
the outer clamping gap includes a first winding gap (421) and a second winding gap (422) that are arranged along an up-down direction, and/or the inner clamping gap (410) includes a third winding gap (411) and a fourth winding gap (412) that are arranged along the up-down direction;
the first winding gap (421) is provided with a first coil winding (810) and the second winding gap (422) is provided with second coil winding (820); and/or the third winding gap (411) is provided with a third coil winding (830) and the fourth winding gap (412) is provided with a fourth coil winding (840).

11. The coil disk of claim 10, wherein the first coil winding (810) and the second coil winding (820) are independent of each other; or
the first coil winding (810) and the second coil winding (820) are connected in series; or
the first coil winding (810) and the second coil winding (820) are connected in parallel.

12. The coil disk of claim 10, wherein the third coil winding (830) and the fourth coil winding are independent of each other; or
the third coil winding (830) and the fourth coil winding (840) are connected in series; or
the third coil winding (830) and the fourth coil winding (840) are connected in parallel.

13. The coil disk of claim 10, wherein the coil disk includes a control circuit board, a first switching circuit is provided on the control circuit board, and the first switching circuit is respectively connected with the first coil winding (810) and the second coil winding (820) to switch a connection relationship between the first coil winding and the second coil winding; and/or
a second switching circuit is provided on the control circuit board, and the second switching circuit is respectively connected with the third coil winding (830) and the fourth coil winding (840) to switch a connection relationship between the third coil winding and the fourth coil winding.

14. The coil disk of claim 10, wherein the coil disk further includes a first inductor L1 and a first resistor R1 configured with the first coil winding;
a second inductor L2 and a second resistor R2 configured with the second coil winding;
a third inductor L3 and a third resistor R3 configured with the third coil winding; and
a fourth inductor L4 and a fourth resistor R4 configured with the fourth coil winding;
wherein a first inductance value of the first inductor L1 is smaller than a second inductance value of the second inductor L2 and/or a fourth inductance value of the fourth inductance L4;
a first resistance value of the first resistor R1 is greater than a second resistance value of the second resistor R2 and/or a fourth resistance value of fourth resistor R4;
a third inductance value of the third inductor L3 is smaller than a fourth inductance value of the fourth inductor L4 and/or a second inductance value of the second inductor L2; and
a third resistance value of the third resistor R3 is greater than a fourth resistance value of the fourth resistor R4 and/or a second resistance value of the second resistor R2.

15. The coil disk of claim 1, wherein the clamping gap (400) includes an inner arc section (850), and the inner arc section is curved and extended downward from the support structure, wherein the clamping gap (400) further includes a transition section (860) and an outer arc section (870); the inner arc section (850) forming a concave arc downward from the support structure (300), the outer arc section forming a concave arc upward from the transition section (860), and the inner arc section (850) and the outer arc section (870) being transitionally connected through the transition section (860).

## Patentansprüche

1. Spulenscheibe, umfassend:
eine Trägerstruktur (300), die in einer Mitte der Spulenscheibe angeordnet ist,
eine erste Klemmrippe (100), wobei ein erstes Ende der Klemmrippe (100) mit der Trägerstruktur (300) verbunden ist, wobei sich ein zweites Ende der ersten Klemmrippe (300) in eine Richtung weg von der Trägerstruktur (300) erstreckt, und
eine zweite Klemmrippe (200), die sich unter der ersten Klemmrippe (300) befindet, wobei ein erstes Ende der zweiten Klemmrippe (200) mit der Trägerstruktur (300) verbunden ist, wobei sich ein zweites Ende der zweiten Klemmrippe (200) in eine Richtung weg von der Trägerstruktur (300) erstreckt,
wobei die erste Klemmrippe (100), die zweite Klemmrippe (200) und die Trägerstruktur (300) eingeschlossen sind, um einen Klemmspalt (400) zum Wickeln eines emaillierten Drahtes zu bilden,
**dadurch gekennzeichnet, dass** die erste Klemmrippe (100) und die zweite Klemmrippe (200) einstückig mit der Trägerstruktur (300) gebildet sind.

2. Spulenscheibe nach Anspruch 1, wobei die Spulenscheibe mehrere erste Klemmrippen (100) beinhaltet, die radial entlang einer Umfangsrichtung der Trägerstruktur verteilt sind, und/oder
mehrere zweite Klemmrippen (200), die radial entlang der Umfangsrichtung der Trägerstruktur verteilt sind, damit der Klemmspalt entlang der Umfangsrichtung der Trägerstruktur verteilt ist.

3. Spulenscheibe nach Anspruch 1, wobei mindestens eine der Breiten der ersten und der zweiten Klemmrippe (100) von der Trägerstruktur (300) nach außen schrittweise zunimmt.

4. Spulenscheibe nach Anspruch 1, wobei die erste Klemmrippe (100) und die zweite Klemmrippe (200) gerade Abschnitte aufweisen und ein radialer Querschnitt des Klemmspaltes (400) dementsprechend einen geraden Abschnitt aufweist und/oder
die erste Klemmrippe (100) und die zweite Klemmrippe (200) abgestufte Abschnitte aufweisen, so dass ein radialer Querschnitt des Klemmspaltes (400) einen abgestuften Abschnitt aufweist, und/oder
die erste Klemmrippe (100) und die zweite Klemmrippe (200) bogenförmige gekrümmte Abschnitte aufweisen, so dass ein radialer Querschnitt des Klemmspalts einen im Bogen gekrümmten Abschnitt aufweist.

5. Spulenscheibe nach einem vorhergehenden Anspruch, wobei eine Anzahl von Schichten aus Spulenwicklungen (800), die in dem Klemmspalt (400) gewickelt sind, 2 bis 5 beträgt.

6. Spulenscheibe nach einem der Ansprüche 1 bis 4, wobei eine Höhe des Klemmspalts (400) 2 mm bis 20 mm beträgt.

7. Spulenscheibe nach Anspruch 1, ferner umfassend eine Innenring-Heizzone und eine Außenring-Heizzone, wobei
der Klemmspalt (400) einen inneren Klemmspalt (410), der sich in der Innenring-Heizzone befindet, und einen äußeren Klemmspalt (420), der sich in der Außenring-Heizzone befindet, beinhaltet und wobei der innere Klemmspalt (410) und der äußere Klemmspalt (420) aufwärts geneigt sind und unterschiedliche Neigungswinkel aufweisen.

8. Spulenscheibe nach Anspruch 7, wobei der äußere Klemmspalt (420) einen ersten Wicklungsspalt (421) und einen zweiten Wicklungsspalt (422) beinhaltet, die entlang einer Oben-Unten-Richtung angeordnet sind, und wobei sich ein Neigungswinkel des ersten Wicklungsspalts (421) von einem Neigungswinkel des zweiten Wicklungsspalts (422) unterscheidet.

9. Spulenscheibe nach Anspruch 7, wobei die Trägerstruktur (300) eine innere Trägerstruktur (310), die sich in der Innenring-Heizzone befindet, und eine äußere Trägerstruktur (320), die sich in der Außenring-Heizzone befindet, umfasst,
wobei die erste Klemmrippe (100) eine erste innere Klemmrippe (121) und eine erste äußere Klemmrippe (122) beinhaltet und die zweite Klemmrippe (200) eine zweite innere Klemmrippe (221) und eine zweite äußere Klemmrippe (222) beinhaltet,
wobei die erste innere Klemmrippe (221) und die zweite innere Klemmrippe (222) von der inneren Trägerstruktur (310) in eine Richtung hin zur Außenring-Heizzone aufwärts geneigt sind, um zwischen der ersten inneren Klemmrippe (121) und der zweiten inneren Klemmrippe (221) den inneren Klemmspalt (410) zu bilden,
wobei die erste äußere Klemmrippe (122) und die zweite äußere Klemmrippe (222) von der äußeren Trägerstruktur in eine Richtung weg von der Innenring-Heizzone aufwärts geneigt sind, um zwischen der ersten äußeren Klemmrippe (122) und der zweiten äußeren Klemmrippe (222) den äußeren Klemmspalt (420) zu bilden.

10. Spulenscheibe nach Anspruch 1, wobei die Spulenscheibe eine Innenring-Heizzone und eine Außenring-Heizzone beinhaltet, der Klemmspalt (400) einen inneren Klemmspalt (410), der sich in der Innenring-Heizzone befindet, und einen äußeren Klemmspalt (420), der sich in der Außenring-Heizzone befindet, beinhaltet,
wobei der äußere Klemmspalt einen ersten Wicklungsspalt (421) und einen zweiten Wicklungsspalt (422) beinhaltet, die entlang einer Oben-Unten-Richtung angeordnet sind, und/oder der innere Klemmspalt (410) einen dritten Wicklungsspalt (411) und einen vierten Wicklungsspalt (412) beinhaltet, die entlang der Oben-Unten-Richtung angeordnet sind,
wobei der erste Wicklungsspalt (421) mit einer ersten Spulenwicklung (810) versehen ist und der zweite Wicklungsspalt (422) mit einer zweiten Spulenwicklung (820) versehen ist und/oder der dritte Wicklungsspalt (411) mit einer dritten Spulenwicklung (830) versehen ist und der vierte Wicklungsspalt (412) mit einer vierten Spulenwicklung (840) versehen ist.

11. Spulenscheibe nach Anspruch 10, wobei die erste Spulenwicklung (810) und die zweite Spulenwicklung (820) unabhängig voneinander sind oder
die erste Spulenwicklung (810) und die zweite Spulenwicklung (820) in Reihe geschaltet sind oder
die erste Spulenwicklung (810) und die zweite Spulenwicklung (820) parallel geschaltet sind.

12. Spulenscheibe nach Anspruch 10, wobei die dritte Spulenwicklung (830) und die vierte Spulenwicklung unabhängig voneinander sind oder
die dritte Spulenwicklung (830) und die vierte Spulenwicklung (840) in Reihe geschaltet sind oder
die dritte Spulenwicklung (830) und die vierte Spulenwicklung (840) parallel geschaltet sind.

13. Spulenscheibe nach Anspruch 10, wobei die Spulenscheibe eine Steuerleiterplatte beinhaltet, wobei auf der Steuerleiterplatte ein erster Schaltkreis bereitgestellt ist und der erste Schaltkreis entsprechend mit der ersten Spulenwicklung (810) und der zweiten Spulenwicklung (820) verbunden ist, um ein Verbindungsverhältnis zwischen der ersten Spulenwicklung und der zweiten Spulenwicklung zu schalten, und/oder
wobei auf der Steuerleiterplatte ein zweiter Schaltkreis bereitgestellt ist und der zweite Schaltkreis entsprechend mit der dritten Spulenwicklung (830) und der vierten Spulenwicklung (840) verbunden ist, um ein Verbindungsverhältnis zwischen der dritten Spulenwicklung und der vierten Spulenwicklung zu schalten.

14. Spulenscheibe nach Anspruch 10, wobei die Spulenscheibe ferner Folgendes beinhaltet:
eine erste Induktionsspule L1 und einen ersten Widerstand R1, die mit der ersten Spulenwicklung konfiguriert sind,
eine zweite Induktionsspule L2 und einen zweiten Widerstand R2, die mit der zweiten Spulenwicklung konfiguriert sind,
eine dritte Induktionsspule L3 und einen dritten Widerstand R3, die mit der dritten Spulenwicklung konfiguriert sind, und
eine vierte Induktionsspule L4 und einen vierten Widerstand R4, die mit der vierten Spulenwicklung konfiguriert sind,
wobei ein erster Induktivitätswert der ersten Induktionsspule L1 kleiner als ein zweiter Induktivitätswert der zweiten Induktionsspule L2 und/oder ein vierter Induktivitätswert der vierten Induktivität L4 ist,
wobei ein erster Widerstandwert des ersten Widerstandes R1 größer als ein zweiter Widerstandswert des zweiten Widerstandes R2 und/oder ein vierter Widerstandswert des vierten Widerstandes R4 ist,
wobei ein dritter Induktivitätswert der dritten Induktionsspule L3 kleiner als ein vierter Induktivitätswert der vierten Induktionsspule L4 und/oder ein zweiter Induktivitätswert der zweiten Induktionsspule L2 ist und
wobei ein dritter Widerstandwert des dritten Widerstandes R3 größer als ein vierter Widerstandswert des vierten Widerstandes R4 und/oder ein zweiter Widerstandswert des zweiten Widerstandes R2 ist.

15. Spulenscheibe nach Anspruch 1, wobei der Klemmspalt (400) einen inneren Bogenabschnitt (850) beinhaltet und der innere Bogenabschnitt gekrümmt ist und sich von der Trägerstruktur abwärts erstreckt, wobei der Klemmspalt (400) ferner einen Übergangsabschnitt (860) und einen äußeren Bogenabschnitt (870) beinhaltet, wobei der innere Bogenabschnitt (850) einen konkaven Bogen abwärts von der Trägerstruktur (300) bildet, wobei der äußere Bogenabschnitt einen konkaven Bogen aufwärts von dem Übergangsabschnitt (860) bildet und der innere Bogenabschnitt (850) und der äußere Bogenabschnitt (870) durch den Übergangsabschnitt (860) übergehend verbunden sind.

## Revendications

1. Disque à bobine, comportant :
une structure de support (300) située au milieu du disque à bobine ;
une première nervure de serrage (100), une première extrémité de la première nervure de serrage (100) étant connectée à la structure de support (300), une deuxième extrémité de la première nervure de serrage (300) s'étendant dans une direction allant à l'opposé de la structure de support (300) ; et
une deuxième nervure de serrage (200) située sous la première nervure de serrage (300), une première extrémité de la deuxième nervure de serrage (200) étant connectée à la structure de support (300), une deuxième extrémité de la deuxième nervure de serrage (200) s'étendant dans une direction allant à l'opposé de la structure de support (300) ;
dans lequel la première nervure de serrage (100), la deuxième nervure de serrage (200) et la structure de support (300) sont enfermées pour former un espace de serrage (400) pour enrouler un fil émaillé ;
**caractérisé en ce que** la première nervure de serrage (100) et la deuxième nervure de serrage (200) sont formées d'une seule pièce avec la structure de support (300).

2. Disque à bobine selon la revendication 1, dans lequel le disque à bobine comprend une pluralité de premières nervures de serrage (100), réparties radialement le long d'une direction allant dans le sens de la circonférence de la structure de support ; et/ou
une pluralité de deuxièmes nervures de serrage (200) réparties radialement le long de la direction allant dans le sens de la circonférence de la structure de support pour que l'espace de serrage soit réparti le long de la direction allant dans le sens de la circonférence de la structure de support.

3. Disque à bobine selon la revendication 1, dans lequel au moins l'une d'une largeur de la première ou de la deuxième nervure de serrage (100) va progressivement en augmentant vers l'extérieur à partir de la structure de support (300).

4. Disque à bobine selon la revendication 1, dans lequel la première nervure de serrage (100) et la deuxième nervure de serrage (200) ont des sections droites, et une section transversale radiale de l'espace de serrage (400) a une section droite en conséquence ; et/ou
la première nervure de serrage (100) et la deuxième nervure de serrage (200) présentent des sections étagées, de telle sorte qu'une section transversale radiale de l'espace de serrage (400) présente une section étagée ; et/ou
la première nervure de serrage (100) et la deuxième nervure de serrage (200) présentent des sections incurvées en forme d'arc, de telle sorte qu'une section transversale radiale de l'espace de serrage présente une section incurvée en forme d'arc.

5. Disque à bobine selon l'une quelconque des revendications précédentes, dans lequel un nombre de couches d'enroulements de bobine (800) enroulés dans l'espace de serrage (400) va de 2 à 5.

6. Disque à bobine selon l'une quelconque des revendications 1 à 4, dans lequel une hauteur de l'espace de serrage (400) va de 2 mm à 20 mm.

7. Disque à bobine selon la revendication 1, comportant par ailleurs une zone de chauffage d'anneau intérieur et une zone de chauffage d'anneau extérieur ; dans lequel
l'espace de serrage (400) comprend un espace de serrage intérieur (410) situé dans la zone de chauffage d'anneau intérieur et un espace de serrage extérieur (420) situé dans la zone de chauffage d'anneau extérieur, et l'espace de serrage intérieur (410) et l'espace de serrage extérieur (420) sont inclinés vers le haut et présentent des angles d'inclinaison différents.

8. Disque à bobine selon la revendication 7, dans lequel l'espace de serrage extérieur (420) comprend un premier espace d'enroulement (421) et un deuxième espace d'enroulement (422) qui sont agencés le long d'une direction allant de haut en bas, et un angle d'inclinaison du premier espace d'enroulement (421) est différent d'un angle d'inclinaison du deuxième espace d'enroulement (422).

9. Disque à bobine selon la revendication 7, dans lequel la structure de support (300) comporte une structure de support intérieure (310) située dans la zone de chauffage d'anneau intérieur et une structure de support extérieure (320) située dans la zone de chauffage d'anneau extérieur ;
la première nervure de serrage (100) comprend une première nervure de serrage intérieure (121) et une première nervure de serrage extérieure (122), et la deuxième nervure de serrage (200) comprend une deuxième nervure de serrage intérieure (221) et une deuxième nervure de serrage extérieure (222) ;
la première nervure de serrage intérieure (221) et la deuxième nervure de serrage intérieure (222) sont inclinées vers le haut à partir de la structure de support intérieure (310) dans une direction allant vers la zone de chauffage d'anneau extérieur pour former l'espace de serrage intérieur (410) entre la première nervure de serrage intérieure (121) et la deuxième nervure de serrage intérieure (221) ;
la première nervure de serrage extérieure (122) et la deuxième nervure de serrage extérieure (222) sont inclinées vers le haut à partir de la structure de support extérieure dans une direction allant à l'opposé de la zone de chauffage d'anneau intérieur pour former l'espace de serrage extérieur (420) entre la première nervure de serrage extérieure (122) et la deuxième nervure de serrage extérieure (222).

10. Disque à bobine selon la revendication 1, dans lequel le disque à bobine comprend une zone de chauffage d'anneau intérieur et une zone de chauffage d'anneau extérieur ; l'espace de serrage (400) comprend un espace de serrage intérieur (410) situé dans la zone de chauffage d'anneau intérieur et un espace de serrage extérieur (420) situé dans la zone de chauffage d'anneau extérieur ;
l'espace de serrage extérieur comprend un premier espace d'enroulement (421) et un deuxième espace d'enroulement (422) qui sont agencés le long d'une direction allant de haut en bas, et/ou l'espace de serrage intérieur (410) comprend un troisième espace d'enroulement (411) et un quatrième espace d'enroulement (412) qui sont agencés le long de la direction allant de haut en bas ;
le premier espace d'enroulement (421) est doté d'un premier enroulement de bobine (810) et le deuxième espace d'enroulement (422) est doté d'un deuxième enroulement de bobine (820) ; et/ou le troisième espace d'enroulement (411) est doté d'un troisième enroulement de bobine (830) et le quatrième espace d'enroulement (412) est doté d'un quatrième enroulement de bobine (840).

11. Disque à bobine selon la revendication 10, dans lequel le premier enroulement de bobine (810) et le deuxième enroulement de bobine (820) sont indépendants l'un de l'autre ; ou
le premier enroulement de bobine (810) et le deuxième enroulement de bobine (820) sont connectés en série ; ou
le premier enroulement de bobine (810) et le deuxième enroulement de bobine (820) sont connectés en parallèle.

12. Disque à bobine selon la revendication 10, dans lequel le troisième enroulement de bobine (830) et le quatrième enroulement de bobine sont indépendants l'un de l'autre ; ou
le troisième enroulement de bobine (830) et le quatrième enroulement de bobine (840) sont connectés en série ; ou
le troisième enroulement de bobine (830) et le quatrième enroulement de bobine (840) sont connectés en parallèle.

13. Disque à bobine selon la revendication 10, dans lequel le disque à bobine comprend une carte de circuit imprimé de commande, un premier circuit de commutation est mis en œuvre sur la carte de circuit imprimé de commande, et le premier circuit de commutation est connecté respectivement au premier enroulement de bobine (810) et au deuxième enroulement de bobine (820) pour commuter une relation de connexion entre le premier enroulement de bobine et le deuxième enroulement de bobine ; et/ou
un deuxième circuit de commutation est mis en œuvre sur la carte de circuit imprimé de commande, et le deuxième circuit de commutation est connecté respectivement au troisième enroulement de bobine (830) et au quatrième enroulement de bobine (840) pour commuter une relation de connexion entre le troisième enroulement de bobine et le quatrième enroulement de bobine.

14. Disque à bobine selon la revendication 10, dans lequel le disque à bobine comprend par ailleurs une première inductance L1 et une première résistance R1 configurées avec le premier enroulement de bobine ;
une deuxième inductance L2 et une deuxième résistance R2 configurées avec le deuxième enroulement de bobine ;
une troisième inductance L3 et une troisième résistance R3 configurées avec le troisième enroulement de bobine ; et
une quatrième inductance L4 et une quatrième résistance R4 configurées avec le quatrième enroulement de bobine ;
dans lequel une première valeur d'inductance de la première inductance L1 est inférieure à une deuxième valeur d'inductance de la deuxième inductance L2 et/ou à une quatrième valeur d'inductance de la quatrième inductance L4 ;
une première valeur de résistance de la première résistance R1 est supérieure à une deuxième valeur de résistance de la deuxième résistance R2 et/ou à une quatrième valeur de résistance de la quatrième résistance R4 ;
une troisième valeur d'inductance de la troisième inductance L3 est inférieure à une quatrième valeur d'inductance de la quatrième inductance L4 et/ou à une deuxième valeur d'inductance de la deuxième inductance L2 ; et
une troisième valeur de résistance de la troisième résistance R3 est supérieure à une quatrième valeur de résistance de la quatrième résistance R4 et/ou à une deuxième valeur de résistance de la deuxième résistance R2.

15. Disque à bobine selon la revendication 1, dans lequel l'espace de serrage (400) comprend une section d'arc intérieure (850), et la section d'arc intérieure est incurvée et étendue vers le bas à partir de la structure de support, dans lequel l'espace de serrage (400) comprend par ailleurs une section de transition (860) et une section d'arc extérieure (870) ; la section d'arc intérieure (850) formant un arc concave vers le bas à partir de la structure de support (300), la section d'arc extérieure formant un arc concave vers le haut à partir de la section de transition (860), et la section d'arc intérieure (850) et la section d'arc extérieure (870) étant connectées de manière transitionnelle par le biais de la section de transition (860).
